(19) Europäisches Patentamt
European Patent Office
Office européen des brevets

(11) EP 2 571 091 B1

(12) **EUROPEAN PATENT SPECIFICATION**

(45) Date of publication and mention of the grant of the patent:
**29.11.2017 Bulletin 2017/48**

(21) Application number: **11780333.8**

(22) Date of filing: **16.03.2011**

(51) Int Cl.:
***H01M 10/12*** *(2006.01)* ***H01M 4/14*** *(2006.01)*
***H01M 4/62*** *(2006.01)* ***H01M 10/44*** *(2006.01)*
*H01M 4/02* *(2006.01)*

(86) International application number:
**PCT/JP2011/001538**

(87) International publication number:
**WO 2011/142072 (17.11.2011 Gazette 2011/46)**

(54) **LEAD STORAGE BATTERY**

BLEIAKKUMULATOR

BATTERIE DE STOCKAGE AU PLOMB

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2010 JP 2010108021**

(43) Date of publication of application:
**20.03.2013 Bulletin 2013/12**

(60) Divisional application:
**17191158.9**

(73) Proprietor: **Hitachi Chemical Company, Ltd.**
**Chiyoda-ku**
**Tokyo 100-6606 (JP)**

(72) Inventors:
- **SHIBAHARA, Toshio**
  **Tokyo 104-0044 (JP)**
- **MINOURA, Satoshi**
  **Tokyo 104-0044 (JP)**
- **TAKAHASHI, Satoru**
  **Tokyo 104-0044 (JP)**
- **TODUKA, Masatoshi**
  **Tokyo 104-0044 (JP)**
- **KOGURE, Koji**
  **Tokyo 104-0044 (JP)**

(74) Representative: **Wilson Gunn**
**Blackfriars House**
**The Parsonage**
**5th Floor**
**Manchester M3 2JA (GB)**

(56) References cited:
**WO-A1-2005/031907**
**WO-A1-2005/124920**
**JP-A- 6 076 815**
**JP-A- H0 362 452**
**JP-A- 2000 208 143**
**JP-A- 2002 141 066**
**JP-A- 2002 231 247**
**JP-A- 2007 026 753**
**JP-A- 2009 104 914**
**US-A- 6 074 782**
**US-A1- 2007 172 727**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a flooded-type lead-acid battery having an electrolyte free from a plate pack and separator inside a container.

### BACKGROUND ART

Lead-acid batteries are characteristic in being highly reliable and inexpensive, and are therefore widely used as a power source for starting automobile engines, a power source for golf carts and other electric vehicles, and a power source for uninterruptible power supply devices and other industrial apparatuses.

In recent years, various techniques for improving fuel economy in automobiles have been studied in order to prevent air pollution and global warming. Micro-hybrid vehicles are being studied as automobiles in which fuel economy-improvement techniques have been implemented, such vehicles including idling-stop system vehicles (hereinafter referred to as ISS vehicles) that reduce engine operation time, and power generation and control vehicles that make efficient use of engine rotation by controlling the alternator so as to reduce as much as possible the load placed on the engine.

In an ISS vehicle, the number of engine start-up cycles is higher and high-current discharge by the lead-acid battery is repeated each time the vehicle is started. Also, in an ISS vehicle or power generation and control vehicle, charging is often insufficient because the amount of power generated by the alternator is reduced and the lead-acid battery is charged intermittently. For this reason, a lead-acid battery used in an ISS vehicle must have the ability to charge as much as possible in a short period of time, i.e., must have improved charge acceptance.

A battery that is used in the manner described above has few opportunities for charging and does not become fully charged. The battery is therefore used in a partial state of charge. Hereinbelow, the partial state of charge is abbreviated as PSOC. When a lead-acid battery is used under PSOC, the service life tends to be shorter than the case in which the lead-acid battery is used in a fully charged state. The reason that service life is shortened when used under PSOC is thought to be that lead sulfate generated on the negative plate during discharge coarsens and it becomes difficult for the lead sulfate to return to metallic lead, which is a charge product, when charging and discharging are carried out in a state of insufficient charge. Therefore, in order to extend service life in a lead-acid battery that is used under PSOC, it is necessary to improve charge acceptance (make it possible carry out as much charging as possible in a short period of time), prevent repeated charging and discharging in a state of excessively insufficient charge, and reduce coarsening of lead sulfate due to repeated charging and discharging.

A lead-acid battery used under PSOC has few opportunities to be charged and does not reach a fully charged state. Therefore, it is difficult for the electrolyte to be stirred in accompaniment with the generation of hydrogen gas in the container. For this reason, higher concentration of electrolyte resides in the lower portion of the container, dilute electrolyte resides in the upper portion of the container, and the electrolyte becomes stratified in this type of lead-acid battery. When the concentration of electrolyte is high, charge acceptance becomes increasingly difficult (charging reactions occur with greater difficulty), and the service life of the lead-acid battery is reduced even further.

Thus, in recent automotive lead-acid batteries, improvement in charge acceptance has become a very important issue in order to make it possible to carry out high-rate discharge to a load with charging over a short period of time, and to improve the service life performance of batteries used under PSOC.

In a lead-acid battery, the charge acceptance of the positive active material is inherently high, but the charge acceptance of the negative active material is poor. Therefore, the charge acceptance of the negative active material must be improved in order to improve the charge acceptance of a lead-acid battery. For this reason, efforts have been made almost exclusively to improve the charge acceptance of the negative active material. Japanese Laid-open Patent Application No. 2003-36882 and Japanese Laid-open Patent Application No. 07-201331 propose improvement in the charge acceptance and service life of a lead-acid battery under PSOC by increasing the carbonaceous electrically conductive material added to the negative active material.

However, these proposals are limited to valve regulated lead-acid batteries in which electrolyte is impregnated in the separators, which are referred to as retainers, and free electrolyte is not allowed to be present within the container; and application cannot be made to a flooded-type lead-acid battery in which the electrolyte is free from the plate pack and separators in the container. In a flooded-type lead-acid battery, it is possible to consider increasing the amount of carbonaceous electrically conductive material added to the negative active material, but when the amount of carbonaceous electrically conductive material added to the negative active material is increased excessively in a flooded-type lead-acid battery, the carbonaceous electrically conductive material in the negative active material bleeds into the electrolyte and pollutes the electrolyte, and in the worst case, causes internal short. Therefore, the amount of carbonaceous electrically conductive material added to the negative active material must be limited in a flooded-type lead-acid battery,

and there is a limit to improving the charge acceptance for the entire lead-acid battery by adding carbonaceous electrically conductive material to the negative active material.

A valve regulated lead-acid battery has low battery capacity because the amount of electrolyte is limited, and suffers from a phenomenon referred to as thermal runaway when the service temperature is high, and use must therefore be avoided in high temperature environments such as an engine compartment. For this reason, the battery must be mounted in the luggage compartment or the like in the case that a valve regulated lead-acid battery is used in an automobile. However, when the battery is mounted in the luggage compartment or the like, the wire harnessing is increased and this is not preferred. A flooded-type lead-acid battery which does not have such a restriction is preferably used as an automotive lead-acid battery. Therefore, there is an urgent need to improve the charge acceptance of a flooded-type lead-acid battery along with the widespread use of ISS vehicle.

On the other hand, in a lead-acid battery, an organic compound that acts to suppress coarsening of the negative active material is added to the negative active material in order to reduce the coarsening of the negative active material occurred due to charging and discharging, to suppress a reduction in the surface area of the negative electrode, and to maintain high reactivity in the charging and discharging reactions. Lignin as a main component of wood is conventionally used as the organic compound for suppressing the coarsening of the negative active material. However, lignin has a wide variety of structures in which a plurality of unit structures are bonded in complex ways, and ordinarily has a carbonyl group and other portions that are readily oxidized or reduced. These portions are therefore oxidized or reduced and decomposed when the lead-acid battery is charged and discharged. Accordingly, the effect of suppressing a reduction in performance by adding lignin to the negative active material cannot be maintained over a long period of time. Lignin has a side effect in that charging and discharging reactions of the negative active material are obstructed and improvement of the charge acceptance is limited because lignin adsorbs to lead ions eluted out from lead sulfate during charging, and reactivity of the lead ions is reduced. Therefore, lignin added to the negative active material improves discharge characteristics, but there is a problem in that lignin improves charge acceptance.

In view of the above, there has also been a proposal to add sodium lignin sulfonate in which a sulfone group has been introduced in the $\alpha$ position of the side chain of the phenylpropane structure, which is the basic structure of lignin; a formaldehyde condensate of bisphenol and aminobenzenesulfonic acid; or the like to the negative active material in place of lignin.

For example, disclosed in Japanese Laid-open Patent Application No. 11-250913, Japanese Laid-open Patent Application No. 2006-196191 and US2007/0172727A1 is the addition of a carbonaceous electrically conductive material, and a formaldehyde condensate of bisphenol and aminobenzenesulfonic acid to the negative active material. In Japanese Laid-open Patent Application No. 2006-196191 in particular, it is disclosed that a formaldehyde condensate of bisphenol and aminobenzenesulfonic acid is selected as the organic compound for suppressing the coarsening of lead sulfate due to charging and discharging; the effect of suppressing coarsening of the lead sulfonate is maintained; and a carbonaceous electrically conductive material is added in order to improve charge acceptance. It is disclosed in Japanese Laid-open Patent Application No. 2003-051306 that electrically conductive carbon and activated carbon are added to the negative active material to improve discharge characteristics under PSOC.

Furthermore, Japanese Laid-open Patent Application No. 10-40907 discloses a lead-acid battery in which the specific surface area of the positive active material is increased to increase the discharge capacity. In this lead-acid battery, the positive active material is made smaller and the specific surface area is increased by adding lignin to the electrolyte when the battery undergoes formation. The invention disclosed in Japanese Laid-open Patent Application No. 10-40907 is used for increasing the discharge capacity of a battery, and no appreciable effect is obtained in terms of improving cycling characteristics under PSOC and charge acceptance required in a lead-acid battery for an idling-stop vehicle and a power generation and control vehicle.

## DISCLOSURE OF THE INVENTION

As described above, conventional proposals have focused on improving performance of negative active material in order to improve the charge acceptance of a flooded-type lead-acid battery and to improve service life performance under PSOC. However, there is a limit to improving the charge acceptance and service life performance under PSOC and it is difficult to make further improvements in the performance of a lead-acid battery used under PSOC by only improving the charge acceptance of the negative active material and improving the service life performance.

An object of the present invention is to further improve charge acceptance and service life performance under PSOC in a flooded-type lead-acid battery in which charging is carried out intermittently in a short period of time and high-rate discharging to a load is carried out in a partial state of charge.

The present invention relates to a flooded-type lead-acid battery having a configuration in which a plate pack is accommodated in a container together with an electrolyte, the plate pack being obtained by stacking a negative plate having a negative active material packed into a negative collector, and a positive plate having a positive active material packed into a positive collector, a separator being interposed therebetween, wherein charging is carried out intermittently

and high-rate discharging to a load is carried out in a partial state of charge.

Added to the negative active material in the present invention are, at least, a carbonaceous electrically conductive material and an organic compound that acts to suppress coarsening of the negative active material due to repeated charging and discharging (hereinafter referred to as "organic compound for suppressing coarsening of the negative active material). Positive plates are configured so that the total surface area [$m^2$] of the positive active material per unit of plate pack volume [$cm^3$] is in a range of 3.5 to 15.6 [$m^2/cm^3$].

As used herein, the term "plate pack volume" is the apparent volume of the plate pack for the case in which the portion of each part of the plate pack that is involved in generating power and that is accommodated inside a single cell, which is the smallest unit of the lead-acid battery, is viewed overall with disregard for concavities and convexities in the outer surface.

In a plate pack configured by stacking a positive plate and a negative plate via a separator, concavities and convexities are formed by portions of the separator that protrude from the plates because the separator is formed to be larger than the positive plate and the negative plate. When the plate pack volume is to be calculated, such concavities and convexities are ignored and the volume of the portion actually involved in generating power is calculated.

In the present invention, the portion inside each part of the plate pack, excluding the plate lugs and plate feet of the positive collectors and the negative collectors (portions excluding only the plate lugs in the case that plate feet are not provided, and the same applies hereinbelow), are portions of the plate pack involved in generating power. In the present specification, [$cm^3$] is used as the unit of plate pack volume. The method for calculating the plate pack volume is described in further detail in the description of the embodiments of the present invention below.

The "total surface area of the positive active material" is the total surface area of the positive active material of all of the positive plates constituting the plate pack accommodated in a single cell, which is the smallest unit of the lead-acid battery. The surface area Sk of the positive active material packed into the $k^{th}$ positive plate can be expressed by the mathematical product of the mass of the active material and the specific surface area of the active material packed into the $k^{th}$ positive plate. The surface area can be expressed in the equation $Sp = S1 + S2 + ... + Sn$, where n is the number of positive plates constituting a single plate pack, and Sp is the total surface area of the positive active material. In the present invention, the "total surface area of the positive active material per unit of the plate pack volume" is obtained by dividing the above-described "total surface area of the positive active material" by the "plate pack volume" defined in the manner described above. In the present specification, [$m^2$] is used as the unit of the total surface area of the positive active material, and [g] is used as the unit of the mass of the active material in order to prevent the numerical value of the "total surface area of the positive active material per unit of the plate pack volume" from becoming excessively large. Therefore, [$m^2/g$] is the unit of specific surface area. In the present invention, the specific surface area of the active material is measured using the following measurement method.

In a preferred aspect of the present invention, a negative plate is used in which at least a carbonaceous electrically conductive material and an organic compound capable of suppressing coarsening of the negative active material are added to the negative active material; and the positive plates are configured so that the total surface area [$m^2$] of the positive active material per unit of plate pack volume [$cm^3$] is in a range of 3.5 to 15.6 [$m^2/cm^3$], and so that the total surface area [$cm^2$] of the positive active material per unit of plate pack volume [$cm^3$] is in a range of 2.8 to 5.5 [$cm^2/cm^3$]. In the present specification, [$m^2$] is used as the unit of the total surface area of the positive active material, as described above, and [$cm^2$] is used as the unit of the total surface area of the positive plates.

As used herein, the "total surface area of the positive plate" is the total of the surface area of the portion of the positive plate that is involved in generating power and that is accommodated inside a single cell, which is the smallest unit of the lead-acid battery. In the present invention, the number of positive plates constituting the plate pack is multiplied by the total (double the product of the vertical dimension and the horizontal dimension of the frame section of the current collector in the case that the frame section of the current collector is square shaped or rectangular) [$cm^2$] of the surface area of the obverse and reverse surfaces of the portion of each positive plate, excluding the plate lug and the plate foot of the current collectors, to thereby calculate the total surface area of the positive plates, and the quotient obtained by dividing the "total surface area of the positive plate" by the "plate pack volume" is the "total surface area of the positive plates per unit of the plate pack volume."

The present inventor found that when the total surface area of the positive active material per unit of the plate pack volume is set in a suitable range, the reaction overvoltage in the charging reaction of the positive active material can be reduced to facilitate progression of the charging reaction, and charge acceptance of the positive active material can be improved; and that the charge acceptance of the entire lead-acid battery can be improved above that of a conventional lead-acid battery and the service life in the case of service under PSOC can be further improved when the positive plate having improved charge acceptance in the above-described manner is used together with a negative plate having improved service life performance and improved charge acceptance (hereinafter referred to as "negative plate with improved performance") by the addition of at least a carbonaceous electrically conductive material and an organic compound for suppressing coarsening of the negative active material to the negative active material.

It was also found that charge acceptance of the entire lead-acid battery and the service life performance in the

case that the lead-acid battery is used under PSOC can be further improved by using the negative plate with improved performance, by setting the total surface area of the positive plates per unit of the plate pack volume in a suitable range after the total surface area of the positive active material per unit of the plate pack volume has been set to a suitable range.

In the present invention, the "total surface area of the positive active material per unit of the plate pack volume" and the "total surface area of the positive plates per unit of the plate pack volume" have been newly introduced as parameters for more accurately specifying the configuration of the positive plates required to obtain an effect in which the reaction overvoltage in the charging reaction of the positive active material is reduced to facilitate the progression of the charging reaction.

In order to obtain a desired effect in which the reaction overvoltage in the charging reaction of the positive active material is reduced to facilitate the progression of the charging reaction, it is possible to consider specifying the range of the specific surface area of the positive active material to be, e.g., a wide range, but it is not possible to unambiguously limit the configuration of the positive plates required to obtain the stated effect by merely having specified the specific surface area of the positive active material. In other words, the amount of active material can be increased to thereby obtain the effect in which the reaction overvoltage in the charging reaction of the positive active material is reduced to facilitate the progression of the charging reaction, even when an active material having a narrow specific surface area is used. Therefore, it is not possible to accurately specify the configuration of the positive plates required to obtain the above-stated effect by merely having specified the range of the specific surface area.

It is possible to obtain the same effect by increasing the number of plates and the total surface area of the positive plates. However, in an actual lead-acid battery, the amount of active material and the surface area (number of plates) cannot be freely set because of a limitation imposed by the fact that the plate pack is accommodated in a fixed battery volume to obtain a required capacity, as stipulated in, e.g., Japanese Industrial Standards(JIS) D 5301. In the present invention, in order to strictly stipulate the configuration of the positive plates required to obtain the desired effect with consideration given to these limitations, the "total surface area of the positive active material," which is the mathematical product of specific surface area and the mass of the active material, is used in lieu of the specific surface area; the "total surface area of the positive plates," which is the total of the surface area of the portion of the positive plates involved in generating power, is used in lieu of the number of plates; and the quotient obtained by dividing the total surface area of the positive plates by the plate pack volume is used as the total surface area of the positive plates per unit of the plate pack volume and is the parameter for specifying the configuration of the positive plates.

In the case that the total surface area of the positive active material per unit of the plate pack volume is less than 3.5 $m^2/cm^3$, the effect of improving the charge acceptance of the entire lead-acid battery cannot be markedly obtained, but when the total surface area of the positive active material per unit of the plate pack volume is set to 3.5 $m^2/cm^3$ or more, the effect of improving the charge acceptance of the entire lead-acid battery can be markedly obtained. When the charge acceptance of the entire lead-acid battery can be improved, the service life performance of the battery in the case of use under PSOC can be improved because a high-rate discharge to a load under PSOC can be carried out without hindrance, and the coarsening of lead sulfate, which is a discharge product, due to repeated charging and discharging in a state of insufficient charge can be suppressed.

When the value of the total surface area of the positive active material per unit of the plate pack volume is made excessively high, the service life of the positive plate is reduced, and a lead-acid battery capable withstanding actual use cannot be obtained because the positive active material become too fine, the structure of the active material is destroyed by repeated charging and discharging, and a phenomenon referred to as so-called sludge formation occurs. Therefore, the total surface area of the positive active material per unit of the plate pack volume cannot be merely increased in an excessive manner. It has been made apparent through experimentation that charge acceptance and service life performance of the battery can be improved when the total surface area of the positive active material per unit of the plate pack volume is set to be 3.5 $m^2/cm^3$ or more, and that the phenomenon in which the positive active material forms a sludge becomes marked when the value of the total surface area of the positive active material per unit of the plate pack volume exceeds 15.6 $m^2/cm^3$. Therefore, the total surface area of the positive active material per unit of the plate pack volume is set in a range of 3.5 $m^2/cm^3$ or more and 15.6 $m^2/cm^3$ or less.

In other words, when a lead-acid battery is assembled using a negative plate with improved performance by the addition of at least a carbonaceous electrically conductive material and an organic compound capable of suppressing coarsening of the negative active material due to charging and discharging, and a positive plate in which the total surface area of the positive active material per unit of the plate pack volume related to discharging reactions is set in a range of 3.5 $m^2/cm^3$ or more and 15.6 $m^2/cm^3$ or less, it is possible to further improve charge acceptance above that of a conventional lead-acid battery in which charge acceptance has been improved entirely by improvement in negative performance, and to provide high-rate discharge to a load under PSOC. When a lead-acid battery is assembled using a negative plate and a positive plate such as those described above, it is possible to obtain a lead-acid battery in which the coarsening of lead sulfate, which is a discharge product, due to repeated charging and discharging in a state of insufficient charge can be suppressed and the service life performance when the battery is used under PSOC can be improved.

In the present invention, the carbonaceous material added to the negative active material to improve the charge acceptance of the negative active material is a carbon-based electrically conductive material, and can be at least one selected from among a group of carbonaceous electrically conductive materials comprising graphite, carbon black, activated carbon, carbon fiber, and carbon nanotubes.

The carbonaceous electrically conductive material is preferably graphite, and more preferably flake graphite. The grain diameter of the flake graphite is preferably 100 μm or more.

The electrical resistivity of the flake graphite is one order of magnitude smaller than the electrical resistivity of the acetylene black or another carbon black, and when flake graphite is used as the carbonaceous electrically conductive material added to the negative active material, the electrical resistance of the negative active material is reduced, and charge acceptance can be improved.

Charging reactions of the negative active material depend on the concentration of lead ions dissolved from the lead sulfate, which is a discharge product, and the charge acceptance increases as the quantity of lead ions increases. The carbonaceous electrically conductive material added to the negative active material has the effect of finely dispersing the lead sulfate generated by the negative active material during discharge. When charging and discharging cycles are repeated in a state of insufficient charge, the lead sulfate as a discharge product becomes coarse, the concentration of lead ions dissolved from the negative active material is reduced, and the charge acceptance is reduced, but if a carbonaceous electrically conductive material is added to the negative active material, coarsening of the lead sulfate is suppressed, the lead sulfate is kept in a fine state, and the concentration of lead ions dissolved from the lead sulfate can be kept high. Therefore, the charge acceptance of the negative plate can be kept high over a long period of time.

The organic compound added to the negative active material for reducing coarsening of the negative active material due to the charging and discharging has formaldehyde condensate of bisphenol and aminobenzenesulfonic acid as a main component.

In this case, it was found by experimentation that favorable results can be obtained by using the formaldehyde condensate of bisphenolA and aminobenzenesulfonic acid sodium salt expressed in chemical structure formula of Chemical formula 1 noted below as the formaldehyde condensate of bisphenol and aminobenzenesulfonic acid.

[Chemical formula 1]

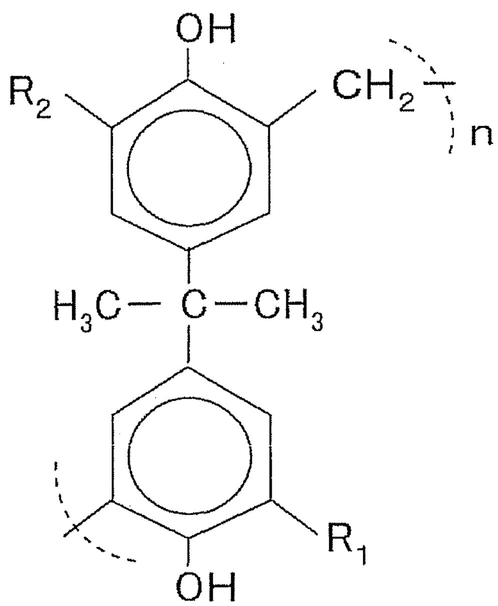

where $R_1$, $R_2$ are hydrogen or

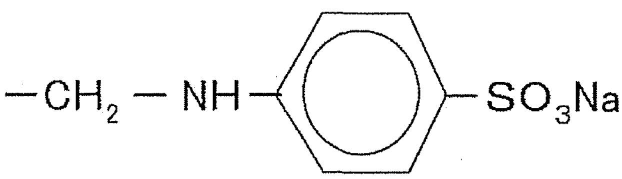

(excluding the case in which $R_1$, $R_2$ are both hydrogen)

The formaldehyde condensate of bisphenol and aminobenzenesulfonic acid has the effect of suppressing coarsening of the negative active material in the same manner as does lignin, and furthermore does not have a portion that is readily oxidized or reduced during charging and discharging of the lead-acid battery. Therefore, the effect of suppressing the coarsening of the negative active material due to charging and discharging can be maintained when the above-described condensate is added to the negative active material. Since lignin adsorbs to lead ions eluted out from lead sulfate during charging and reactivity of the lead ions is reduced, there is a side effect in that charging and discharging reactions of the negative active material are obstructed and improvement of the charge acceptance is limited.

However, the condensate described above has little side effect that obstructs charging and discharging reactions because the amount adsorbed to the lead ions is low in comparison with lignin. Therefore, the improved charge acceptance of the negative active material can be maintained, a reduction in charging and discharging reactivity due to repeated charging and discharging can be suppressed, and the charge acceptance and service life performance of the negative plate can be improved when the formaldehyde condensate of bisphenol and aminobenzenesulfonic acid is added together with the carbonaceous electrically conductive material to the negative active material.

The surface of the separator facing the surface of the negative plate among the two surfaces in the thickness direction of the separator is preferably configured to contain a nonwoven fabric including a fiber of at least one material selected from the group consisting of glass, pulp, and polyolefin, in the case that the organic compound for reducing the coarsening of negative active material due to charging and discharging is one having the formaldehyde condensate of bisphenol and aminobenzenesulfonic acid as the main component, and the carbonaceous electrically conductive material is at least one selected from the material group consisting of graphite, carbon black, activated carbon, carbon fiber, and carbon nanotubes.

In the case that a separator configured in the manner described above is used, it has been confirmed by experimentation that it is possible to obtain particularly preferred results when the value of the total surface area of the positive active material per unit of the plate pack volume is set in a range of 3.5 $m^2/cm^3$ or more and 15.6 $m^2/cm^3$ or less.

The present invention reveals that a marked effect can be obtained in which the charge acceptance of the lead-acid battery and the service life performance during use under PSOC are improved by combining the use of a negative plate with improved performance (charge acceptance and service life performance), and a positive plate in which the total surface area of the positive active material per unit of the plate pack volume is set in a suitable range; and that the charge acceptance and of the lead-acid battery and the service life performance during use under PSOC are further improved by combining the use of a negative plate with improved performance and a positive plate in which the total surface area of the positive active material per unit of the plate pack volume has been set in a suitable range and the total surface area of the positive plates per unit of the plate pack volume has been set in a suitable range.

The negative plate is preferably one in which the charge acceptance and service life performance are as high as possible. In the present invention, the carbonaceous electrically conductive material to be added to the negative active material in order to improve the charge acceptance of the negative plate and the amount of organic compound to be added to the negative active material in order to suppress coarsening of the negative active material due to charging and discharging are not particularly stipulated, but in the implementation of the present invention, it is apparent that the amount of additives will be set so as to improve the performance of the negative plate to the extent possible.

[Effect of the Invention]

In accordance with the present invention, by using, in combination, a positive plate in which the total surface area of the positive active material per unit of the plate pack volume is set in a range of 3.5 $m^2/cm^3$ or more and 15.6 $m^2/cm^3$ or less to improve charge acceptance, and a negative plate in which charge acceptance and service life performance has been improved by the addition of a carbonaceous electrically conductive material and an organic compound capable of suppressing coarsening of the negative active material to the negative active material, it becomes possible to further improve charge acceptance of the lead-acid battery overall above that of a conventional lead-acid battery in which charge acceptance has been improved entirely by improvement in negative performance. Therefore, not only is high-rate discharge to a load under PSOC made possible, but it is also possible to suppress coarsening of lead sulfate due to repeated charging and discharging in a state of insufficient charge, and to improve the service life performance during use under PSOC.

In the present invention, the charge acceptance and service life performance of a lead-acid battery can be dramatically improved in the particular case that the organic compound added to the negative active material for suppressing the coarsening of the negative active material due to charging and discharging is one that uses a formaldehyde condensate of bisphenol and aminobenzenesulfonic acid as the main component to reduce side effects in which charging reactions are obstructed.

BRIEF DESCRIPTION OF THE DRAWINGS

FIG. 1 is a graph showing the relationship between the electrical potential of the negative plate and the positive plate, and the charging current in the case that an automotive lead-acid battery having an open circuit voltage of 12 V is being charged and the charging voltage is 14 V (constant);

FIG. 2 is a spectral diagram showing the result of extracting formaldehyde condensate of bisphenol A and aminobenzenesulfonic acid sodium salt from the negative plate after formation and measuring the spectrum by NMR

spectroscopy;

FIG. 3 is a longitudinal sectional view that schematically shows a state in which the plate pack is accommodated inside the cell chamber of the lead-acid battery; and

FIG. 4 is a cross-sectional view showing a cross section of the cell chamber along the line IV-IV of FIG. 3.

## BEST MODE FOR CARRYING OUT THE INVENTION

The lead-acid battery according to the present invention is advantageously used in ISS vehicles, power generation and control vehicles, and other micro-hybrid vehicles as a flooded-type lead-acid battery in which charging is carried out intermittently and high-rate discharging to a load is carried out in a partial state of charge. The lead-acid battery according to the present invention has a configuration which a plate pack is accommodated in a container together with an electrolyte, the plate pack being configured by stacking separators between negative plates composed of negative active material packed into a negative collector and positive plates composed of positive active material packed into a positive collector. The basic configuration is the same as a conventional lead-acid battery.

Efforts have heretofore been made to improve charge acceptance exclusively in the negative plate in order to improve charge acceptance in a lead-acid battery, but in the present invention, charge acceptance is improved in the negative plate as well as in the positive plate, and a negative plate having improved charge acceptance and a positive plate having improved charge acceptance are used in combination, whereby further improvement in the charge acceptance of a lead-acid battery is obtained, coarsening of lead sulfate due to repeated charging and discharging in a state of insufficient charge is reduced, and service life performance is further improved. The basic technical concepts of the present invention will be described prior to the description of the example of the present invention.

As a result of analyzing the relationship between the charging current and changes in the potential of the positive plate during charging, and the relationship between the charging current and changes in the potential of the negative plate during charging, the inventor found that when the charge acceptance of the positive plate is improved for the case in which there is used a negative plate having improved charge acceptance by reducing reaction overvoltage, the charge acceptance of an entire lead-acid battery can be improved over a conventional lead-acid battery in which only the charge acceptance of the negative plate has been improved. When charge acceptance can be improved, high-rate discharge to a load under PSOC can be carried out without obstruction. It is also possible to reduce the coarsening of lead sulfate when charging and discharging is repeatedly carried out in a state of insufficient charge, and to improve service life performance.

FIG. 1 shows the relationship between the charging current and the potential of the negative plate and positive plate for the case in which an automotive lead-acid battery having an open circuit voltage of 12 V is being charged and the charging voltage is 14 V (constant). In FIG. 1, the vertical axis shows the charging current and the horizontal axis shows the potential of the positive plate and negative plate measured in relation to a standard hydrogen electrode (vs. SHE). In the diagram, N1 and N2 show curves of the charging current vs. potential of the negative plate, and P1 and P2 show curves of the charging current vs. potential of the positive plate. Curves of the charging current vs. potential of the negative plate should normally be illustrated in the third quadrant of an orthogonal coordinate system, but to facilitate description in FIG. 1, the curves of the charging current vs. potential of the negative plate are shown in the first quadrant together with the curves of the charging current vs. potential of the positive plate with the polarity of the current and potential inverted.

In FIG. 1, N1 shows a curve of the charging current vs. potential for the case in which the overvoltage of the charging reaction carried out on the negative plate is high in comparison with N2. When the overvoltage of the charging reaction is high, the curve of the charging current vs. potential of the negative plate has a shape that considerably bulges outward in the manner of N1 in the diagram, but when the overvoltage is low, a curve that is more erect than N1 is obtained in the manner of N2.

P1 shows a curve of the charging current vs. potential for the case in which the overvoltage of the charging reaction carried out on the positive plate is high in comparison with P2. The curve of the charging current vs. potential P1 in the case that the overvoltage is high has a shape that bulges further outward than P2 in the diagram, but when the reaction overvoltage is low, the curve is more erect than P1.

Here, the overvoltage $\eta$ of the charging reaction is the amount of change in the potential produced in each electrode when the charging voltage is applied in an open-circuit state. The overvoltage $\eta$ is the absolute value of the difference between the potential of the electrodes when the charging voltage is applied and the equilibrium potential (open-circuit voltage), i.e., $\eta$ = | electrode potential when the charging voltage is applied - equilibrium potential |.

The curve of the charging current vs. potential of a negative plate which has not been particularly treated to improve the charge acceptance of the negative active material has a shape that bulges outward in the manner shown in N1 of FIG. 1, but the erect shape of N2 is a curve of the charging current vs. potential of a negative plate which has had a suitable amount of carbonaceous electrically conductive material and organic compound for reducing the coarsening of negative active material due to charging and discharging added to the negative active material to improve the

charge acceptance.

The curve of the charging current vs. potential of a positive plate which has not been particularly treated to improve the charge acceptance of the positive active material has a shape such as that shown by P1 of FIG. 1. P1 is a curve of the charging current vs. potential of a positive plate used in a conventional lead-acid battery, and has a more erect curve than N1. This shows that inherently the charge acceptance of the negative plate is low and the charge acceptance of the positive plate is high in a lead-acid battery. In the case that the overvoltage of the charging reaction of the positive plate is reduced to improved the charge acceptance of the positive plate, the curve of the charging current vs. potential of the positive plate has a more erect shape than P1, as shown by P2 of FIG. 1.

When a lead-acid battery is assembled using a negative plate and positive plate which have N1 and P1 as characteristic curves of the charging current vs. potential, I11 is the charging current that flows when a charging voltage of 14 V is applied from a state of open-circuit voltage (12 V). The open-circuit voltage is the difference between the positive potential and the negative potential, and the 14 V to be applied is also the difference between the positive potential and the negative potential.

Next, a negative plate in which the overvoltage of the charging reaction is reduced to improve the charge acceptance so that the characteristics curve of the charging current vs. potential is N2, and a positive plate in which the curve of the charging current vs. potential is P1 were assembled into a lead-acid battery. I21 (> I11) is the charging current that flows when a charging voltage of 14 V has been applied. It is apparent from the above that the charging current can be considerably increased even when the curve of the charging current vs. potential of the positive plate remains as P1 (even when the performance of the positive is not particularly improved). In other words, when the charge acceptance of the negative active material is improved so that the characteristics curve of the charging current vs. potential is N2, the charge acceptance of the entire lead-acid battery can be dramatically improved even when the charge acceptance of the positive plate is not particularly improved.

Next, the positive plate in which the reaction overvoltage has been reduced so that the curve of the charging current vs. potential is P2 is combined with a negative plate in which the curve of the charging current vs. potential is N1 and a lead-acid battery is assembled. I12 (> I11) is the charging current that flows when a charging voltage of 14 V has been applied. It is apparent from the above that the charge acceptance can be improved in comparison with the case in which a positive plate having a curve of P1 and a negative plate having a curve ofN1 are used in combination. However, the charge acceptance cannot be improved to the extent of the case in which a positive plate having a curve of P1 and a negative plate having a curve of N2 are used in combination.

However, when a negative plate in which the overvoltage has been reduced so that the curve of the charging current vs. potential becomes N2 (charge acceptance has been improved) and a positive plate in which the overvoltage has been reduced so that the curve of the charging current vs. potential becomes P2 (charge acceptance has been improved) are combined together to assemble a lead-acid battery, the charging current that flows when a charging current of 14 V is applied can be increased to I22 (> I11), and the charge acceptance of an entire lead-acid battery can be greatly improved in comparison with the case in which only the charge acceptance of the negative plate has been improved.

The inventor found that the charge acceptance of an entire lead-acid battery can be greatly improved in comparison with a conventional lead-acid battery in which only the charge acceptance of the negative plate has been improved, by improving the charge acceptance of a positive plate as described above, and using the positive plate in combination with a negative plate in which the charge acceptance has been improved.

In view of the above, after thoroughgoing research of means for improving the charge acceptance of the positive plate, the inventor found as a result experimentation that when the total surface area of the positive active material per unit of the plate pack volume is increased, the charge acceptance of the positive plate can be improved so that the curve of the charging current vs. potential is a curve that rises in the manner of P2 of FIG. 1. The inventor found that it is possible to further improve charge acceptance of the lead-acid battery overall and to further improve service life performance during use under PSOC in comparison with a conventional lead-acid battery in which charge acceptance of the battery overall has been improved entirely by improvement in the charge acceptance of the negative plate, by assembling a lead-acid battery using a combination of a positive plate with improved charge acceptance obtained by setting the total surface area of the positive active material per unit of the plate pack volume in a range of 3.5 $m^2/cm^3$ or more, and a negative plate in which charge acceptance and service life performance are improved by adding to the negative active material a carbonaceous electrically conductive material and an organic compound for suppressing the coarsening of negative active material due to charging and discharging.

Here, the method of calculating the plate pack volume will be described. As described above, the plate pack volume is the apparent volume of the portion of each part of the plate pack accommodated in a single cell, which is the smallest unit of the lead-acid battery, when the plate pack is viewed overall, and does not include external surface concavities and convexities, more particularly, the concavities and convexities formed by portions of the separator that protrude from the plates with the separator arranged between the positive plate and the negative plate. This is determined as follows.

In other words, in the case that the positive plates and the negative plates constituting a plate pack have the same size, the plate pack volume can be calculated by performing a computation in which the thickness dimension (the dimension of the plate pack as measured in the stacking direction of the plates) in the stacking direction of the plate pack in a state accommodated in the cell chamber is multiplied by the surface area of one side of the portions that exclude the plate lug and plate foot sections of the negative plate; or by performing a computation in which the thickness dimension in the stacking direction of the plate pack in a state accommodated in the cell chamber is multiplied by the surface area of one side of the portions that exclude the plate lug and plate foot sections of the positive plate.

For example, the plate pack 4, which is configured by stacking the positive plate 1 and the negative plate 2 having the same vertical and horizontal dimensions via a separator 3 that is formed to be larger than the plates, is accommodated inside a cell chamber 6 formed inside the container 5, as shown in FIGS. 3 and 4, and the two ends of the plate pack 4 in the stacking direction are placed in contact with the ribs 7, 8 formed on the inner surface of the cell chamber 6. In this case, the vertical and horizontal dimensions a and b of the portions excluding the plate lug section 9 and the plate foot section 10 of the plate are multiplied to thereby calculate the surface area c = a × b of one side of the negative plate or the positive plate, as shown in FIG. 4, and the thickness dimension d of the plate pack 4 in the stacking direction is multiplied by the surface area c to calculate the plate pack volume e (= c × d). The thickness dimension d of the plate pack 4 in the stacking direction is the dimension of the plate pack 4 in the stacking direction as measured in a state accommodated inside a cell chamber of the lead-acid battery to be designed. In general, the plate pack 4 is inserted into the cell chamber in a state compressed in the stacking direction, and is arranged in a state in which the plates arranged at the two ends of the plate pack 4 in the stacking direction are in contact with the ribs 7, 8 formed on inner surface of the cell chamber. Therefore, the thickness dimension d of the plate pack 4 in the stacking direction is equal to the distance between the ribs 7, 8 formed on the opposing inner surfaces of the cell chamber.

In the description above, the size of the positive plate and the negative plate constituting the plate pack is the same, but in the case that the size of the positive plate and the negative plate constituting the plate pack 4 is different, the plate pack volume is calculated by multiplying the thickness dimension of the plate pack in the stacking direction in a state accommodated in the cell chamber by the surface area of one side of the portion that excludes the plate lug and plate foot sections of the larger plate.

In the present invention, the specific surface area of the active material of the positive active material is measured by the gas adsorption method. The gas adsorption method is general method for measuring specific surface area, and is a method in which the surface of a measurement material to made to absorb an inert gas for which the size of a single molecule is known, and the surface area is calculated from the absorption amount and the occupied area of the inert gas. Nitrogen gas can be used as the inert gas. Specifically, the measurement is carried out based on the BET method described below.

Chemical formula (1) below often holds true when P/Po is in a range of 0.05 to 0.35, where P is the adsorption equilibrium when the gas absorbed by the surface of the measured material is in a state of adsorption equilibrium at a constant temperature; $P_0$ is the saturation vapor pressure at the adsorption temperature; V is the adsorption amount at adsorption equilibrium pressure P; $V_m$ is the monolayer adsorption amount (the adsorption amount when gas molecules have formed a monolayer on a solid surface); and C is the BET constant (a parameter related to the interaction between the solid surface and the adsorptive substance). Formula (1) is modified (the numerator and denominator of the left side are divided by P) to obtain formula (2). Gas molecules for which the adsorption occupied surface area is known are adsorbed on the sample for the total specific surface area used in the measurement, and the relationship between the adsorbed amount (V) and the relative pressure ($P/P_0$) is measured. The left side of formula (2) and P/Po are plotted using the measured V and P/Po. Here, s is the slope and formula (3) is derived from formula (2).
With i indicating the intercept, the intercept i and the slope s are expressed in the formulas (4) and (5). Formulas (6) and (7) are modifications of formulas (4) and (5), respectively; and formula (8) is obtained for calculating the monolayer adsorption amount $V_m$. In other words, the adsorption amount V at a certain relative pressure P/Po is measured at several points, and the slope and intercept of the plotted line are calculated to produce the monolayer adsorption amount $V_m$. The total surface area Stotal of a sample of obtained using formula (9), and the specific surface area S is calculated from the total surface area $S_{total}$ using formula (10).
[Formula 1]

$$\frac{P}{V(P_0 - P)} = \left(\frac{C-1}{V_m C}\right)\left(\frac{P}{P_0}\right) + \frac{1}{V_m C} \qquad \text{Formula (1)}$$

P: Adsorption equilibrium in a state of adsorption equilibrium at a constant temperature
$P_0$: Saturation vapor pressure at adsorption temperature
V: Adsorption amount at adsorption equilibrium pressure P

$V_m$: Monolayer adsorption amount (the adsorption amount when gas molecules have formed a monolayer on a solid surface)
C: BET constant (a parameter related to the interaction between the solid surface and the adsorptive substance)

[Formula 2]

$$\frac{1}{V\left(\frac{P_0}{P}-1\right)}=\left(\frac{C-1}{V_m C}\right)\left(\frac{P}{P_0}\right)+\frac{1}{V_m C} \qquad \text{Formula (2)}$$

[Formula 3]

$$s=\frac{C-1}{V_m C}=\frac{C}{V_m C}-\frac{1}{V_m C}=\frac{1}{V_m}-\frac{1}{V_m C} \qquad \text{Formula (3)}$$

[Formula 4]

$$i=\frac{1}{V_m C} \qquad \text{Formula (4)}$$

[Formula 5]

$$s=\frac{1}{V_m}-i \qquad \text{Formula (5)}$$

[Formula 6]

$$s\times V_m=1-i\times V_m \qquad \text{Formula (6)}$$

[Formula 7]

$$(s+i)V_m=1 \qquad \text{Formula (7)}$$

[Formula 8]

$$V_m=\frac{1}{s+i} \qquad \text{Formula (8)}$$

[Formula 9]

$$S_{total}=(V_m\times N\times A_{CS})M \qquad \text{Formula (9)}$$

$S_{total}$: Total surface area ($m^2$)
$V_m$: Monolayer adsorption amount (-)
N: Avogadro's number (-)
$A_{CS}$: Adsorption cross-sectional surface area ($m^2$)
M: Molecular weight (-)

[Formula 10]

$$S = \frac{S_{total}}{w} \quad \text{Formula (10)}$$

$S_{total}$: Specific surface area ($m^2/g$)
w: Sample amount (g)

A high total surface area of the positive active material per unit of the plate pack volume, i.e., the mathematical product of the specific surface area of the active material and the mass of the active material means that it is possible to maintain for a long period of time a state in which diffusion migration of sulfate ions ($SO_4^{2-}$) and hydrogen ions ($H^+$) as the reactive species of the discharge reaction is carried out in a rapid manner, and that the discharge reactions can be maintained over a long period of time. Maintaining the diffusion of the reactive species over a long period of time means that there are many diffusion paths for the reactive species.

On the other hand, diffusion paths for the sulfate ions and hydrogen ions generated due to the progression of charging reactions are required in the charging reactions, and when the total surface area of the positive active material per unit of the plate pack volume is set at a high level, it is thought that many diffusion paths can be provided for the sulfate ions and hydrogen ions generated when the charging reactions are carried out, and the products can be rapidly diffused without accumulating on the reaction surface of the plates. It is also thought that the charging reactions are thereby smoothly carried out over the entire plate, the progress of charging reaction is facilitated, and the charge acceptance of the positive plate can be improved.

In the present invention, at least a carbonaceous electrically conductive material and an organic compound for suppressing the coarsening of negative active material due to charging and discharging are added to the negative active material in order to improve the performance of the negative plate.

The carbonaceous electrically conductive material is preferably selected from among the material group consisting of graphite, carbon black, activated carbon, carbon fiber, and carbon nanotubes. Preferred among these is graphite, and flake graphite is preferably selected as the graphite. In the case that flake graphite is used, the average primary particle diameter is preferably 100 $\mu$m or more. The amount of the carbonaceous electrically conductive material added is preferably in a range of 0.1 to 3 parts by mass in relation to 100 parts by mass of the negative active material (spongy metallic lead) in a fully charged state (which is, hereinafter, simply referred to as "100 parts by mass").

The flake graphite noted above refers to the flake graphite described in JIS M 8601 (2005). The electrical resistance of the flake graphite is 0.02 $\Omega\cdot$cm or less and is one order of magnitude less than that of acetylene black or another carbon black, which is about 0.1 $\Omega\cdot$cm. Therefore, the electrical resistance of the negative active material is reduced and the charge acceptance can be improved by using flake graphite in place of a carbon black used in a conventional lead-acid battery.

Here, the average primary particle diameter of flake graphite is obtained in accordance with the laser diffraction and scattering method of JIS M 8511 (2005). A flake graphite material was added in a suitable amount to an aqueous solution containing 0.5 vol.% of a commercially available surfactant polyoxyethylene octyl phenyl ether (e.g., Triton X-100 manufactured by Roche Diagnostics) as the dispersant, the system was exposed to 40 W ultrasonic waves for 180 seconds while being stirred, and the average particle diameter was then measured using a laser diffraction and scattering-type grain size distribution measurement device (e.g., Microtrac 9220 FRA manufactured by Nikkiso Co., Ltd.) to calculate the average primary particle diameter of the flake graphite. The value of the average particle diameter (median diameter: D50) thus calculated was used as the average primary particle diameter.

A lead-acid battery mounted in an ISS vehicle, power generation and control vehicle, or other micro-hybrid vehicle is used in a partial state of charge referred to as PSOC. In a lead-acid battery used under such conditions, lead sulfate, which is an insulator produced herein the negative active material during discharge, gradually coarsens due to repeated charging and discharging, and a phenomenon referred to as sulfation occurs prematurely. When sulfation occurs, the discharge performance and charge acceptance of the negative active material is dramatically reduced.

The carbonaceous electrically conductive material added to the negative active material has the effect of suppressing the coarsening of the lead sulfate, keeping the lead sulfate in a fine state, suppressing a reduction in the concentration of lead ions that elute from the lead sulfate, and maintaining a state of high charge acceptance.

A negative plate that can maintain a state of high charge acceptance for a long period of time can be obtained without compromising the long-term reactivity of charging and discharging by adding to the negative active material a suitable amount of an organic compound for reducing the coarsening of negative active material due to charging and discharging.

It is possible to improve the charge acceptance of an entire battery merely by improving the performance of the negative plate by adding the carbonaceous electrically conductive material and organic compound for reducing the

coarsening of the negative active material as described above. However, the charge acceptance of an entire battery can be further improved by combining the above-noted negative plate with the positive plate described above.

The formaldehyde condensate of bisphenol and aminobenzenesulfonic acid used as the organic compound for reducing the coarsening of negative active is a condensate of bisphenolA and aminobenzenesulfonic acid expressed in the chemical structure of Chemical formula 1.

[Chemical formula 1]

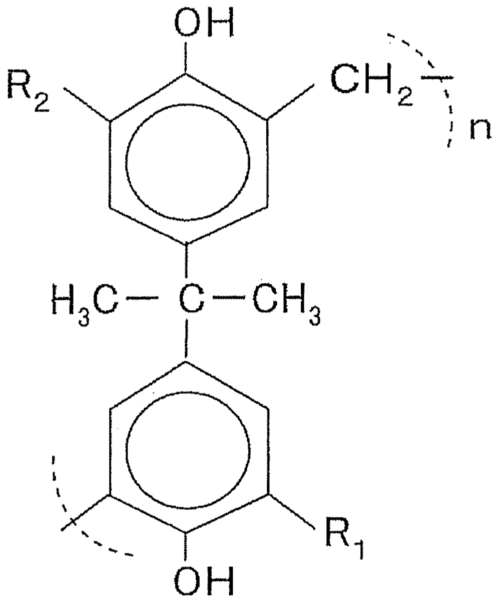

where $R_1$, $R_2$ are hydrogen or

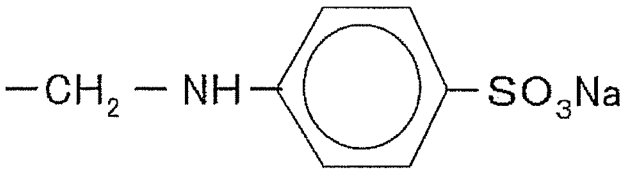

(excluding the case in which $R_1$, $R_2$ are both hydrogen)

A particularly good effect can be obtained through the use of a condensate having the basic structural unit in which p-aminobenzenesulfonic acid group is bonded to a benzene nucleus of a bisphenol, but an equivalent effect can be obtained even when a condensate is used in which the sulfonic group is bonded to the benzene nucleus of a bisphenol.

As described above, the charging reactions of the negative active material depend on the concentration of lead ions dissolved from the lead sulfate, which is a discharge product, and the charge acceptance increases as the quantity of lead ions increases. Lignin is widely used as the organic compound added to the negative active material in order to suppress the coarsening of negative active material due to charging and discharging, but lignin has a side effect in that it adsorbs onto lead ions, reduces the reactivity of the lead ions, and therefore obstructs the charging reaction of the negative active material and limits improvement in the charge acceptance. In contrast, the formaldehyde condensate of bisphenol and aminobenzenesulfonic acid having the chemical structure formula of Chemical formula 1 noted above has weak adsorptive strength to lead ions and the adsorptive amount is low. Therefore, when the condensate described above is used in place of lignin, obstruction to charge acceptance is rarely occurred, and obstruction to maintenance of the charge acceptance by addition of the carbonaceous electrically conductive material is reduced.

It is also possible (not according to the present invention) to use the sodium lignin sulfonate expressed in the chemical structure formula (partial structure) of Chemical formula 2 below as the organic compound for reducing the coarsening of negative active material due to charging and discharging. Sodium lignin sulfonate is widely used as an organic compound for reducing the coarsening of negative active material, but there is a drawback in that it is highly adsorptive to lead ions and has the side effect of suppressing charging reactions. In contrast, the formaldehyde condensate of bisphenol and aminobenzenesulfonic acid has weak adsorptive strength to lead ions and the adsorptive amount on the lead ions is low. Therefore, charging reactions are substantially uninhibited and charge acceptance is not obstructed.

[Chemical formula 2]

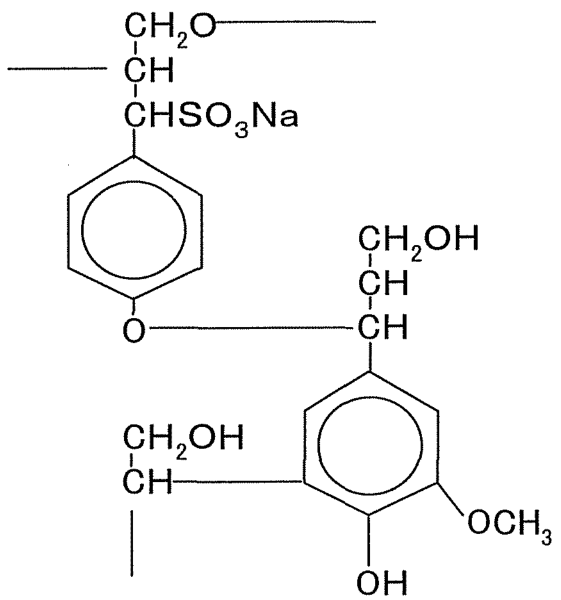

An ordinary polyethylene separator made from a microporous polyethylene sheet may be used as the separator in the implementation of the present invention, but it is preferred that the polyethylene separator not be used alone, but in combination with a separator composed of a nonwoven fabric (hereinafter referred to as a "separator composed of a nonwoven fabric") containing glass fiber, polyolefin (polyethylene, polypropylene, or the like) fiber, pulp, or the fiber of another material. In this case, the polyethylene separator and the separator composed of a nonwoven fabric are superimposed so that the surface of the separator facing the negative plate is composed of a nonwoven fabric.

The separator composed of a nonwoven fabric may be one having a mixture of a plurality of fibers selected from the materials noted above. The nonwoven fabric composed of a mixture of a plurality of fibers is preferably one that is not limited to glass fibers alone, but is preferably one that is composed of a mixture of glass fibers and acid-resistant organic resin fibers, or one in which silica has been added to the mixture as required, such as the thin separator applied to a valve regulated lead-acid battery disclosed in, e.g., Japanese Laid-open Patent Application No. 2002-260714. The nonwoven fabric can be manufactured by dispersing fiber in water and forming a web by paper-making techniques. Therefore, an inorganic powder can be readily included in the nonwoven fabric by dispersing the inorganic powder in the water together with the fiber during paper-making.

Lead sulfate ions produced from lead sulfate during charging migrate downward through the surface of the plate. Since the battery does not become fully charged under PSOC, the electrolyte is not stirred by gassing. As a result, the concentration of the electrolyte becomes nonuniform, which is referred to as stratification, wherein the specific gravity of the electrolyte in the lower portion of the battery is increased and the specific gravity of the electrolyte in the upper portion is reduced. When such a phenomenon occurs, the charge acceptance and discharge performance are reduced because the reaction surface area is reduced. The stratification can be prevented because the descent of lead ions can be prevented when a highly porous separator composed of a nonwoven fabric is made to face the surface of the negative plate. It is possible to improve the charge acceptance of an entire battery using such a separator alone, but the charge acceptance of an entire battery can be further improved by using such a separator in combination with the positive plate described above. The charge acceptance of an entire lead-acid battery can be dramatically improved by using the separator in combination with the positive plate and negative plate described above.

[Examples]

Positive plate

An unformed positive plate was fabricated in the following manner. First, 0.1 mass% of chopped fiber (polyethylene terephthalate short fibers, and the same applies hereinbelow) was added to 1.0 kg of starting material lead powder having lead oxide as the main component, and the system was mixed in a kneader. Next, water and diluted sulfuric acid having specific gravity of 1.26 (at 20°C) were dropped into and kneaded with the mixture of raw material lead powder and cut fiber to prepare a positive active material paste having a moisture content of 14 mass% and a lead

sulfate content of 15 mass%. Then, 67 g of the positive active material paste per plate was packed into a current collector composed of a lead-calcium alloy grid, after which the assembly was aged for 18 hours at 50°C in an atmosphere at 95% humidity. The positive active material packed into the current collector was thereafter dried for 16 hours at a temperature of 60°C to fabricate an unformed positive plate.

Negative plate

An unformed negative plate was fabricated in the following manner. A formaldehyde condensate of bisphenolA and aminobenzene sodium sulfonate salt (molecular weight: 15,000 to 20,000; sulfur content in the compound: 6 to 10 mass%) shown in Chemical Formula 1 above was prepared as the organic additive. Next, 0.2 mass% of the formaldehyde condensate of bisphenolA and aminobenzene sodium sulfonate salt above was added to and mixed with 1.0 kg of a starting material lead powder having lead oxide as the main component. Added to this mixture were 1.0 mass% of carbon black powder (specific surface area: 260 $m^2/g$) in which heavy fuel oil was the starting material, 2.0 mass% of barium sulfate powder, and 0.1 mass% of chopped fiber with respect to 1.0 kg of the starting material lead powder, and the mixture was mixed in a kneader and the various above-described ingredients were dispersed in the starting material lead powder. Water and diluted sulfuric acid (specific gravity: 1.26 at 20°C) were dropped into and kneaded with the mixture obtained this manner to prepare a negative active material paste having a moisture content of 12 mass% and a lead sulfate content of 13 mass%. The negative active material paste was packed into a current collector composed of a lead-calcium alloy grid, after which the assembly was aged for 18 hours at 50°C in an atmosphere at 95% humidity. The negative active material packed into the current collector was thereafter allowed to dry to fabricate an unformed negative plate. The carbonaceous electrically conductive material and the organic compound for reducing the coarsening of the negative active material were varied, and negative plates A, B, C were fabricated as described below.

(not according to the present invention) Negative plate A:

An organic compound in which sodium lignin sulfonate expressed in Chemical Formula 2 was used as the main component was selected as the organic compound for reducing the coarsening of negative active material, and carbon black (specific surface area: 260 $m^2/g$) obtained from heavy fuel oil as the starting material was used as the carbonaceous electrically conductive material and the addition amount was 0.2 parts by mass in relation to 100 parts by mass of the active material. The negative active material paste to which the organic compound and carbon black had been added was packed into an expanded-type current collector to fabricate a negative plate A.

Negative plate B:

An organic compound in which formaldehyde condensate of bisphenolA and aminobenzene sodium sulfonate salt (molecular weight: 17,000 to 20,000; sulfur content in the compound: 6 to 11 mass%) expressed in Chemical Formula 1 was used as the main component was selected as the organic compound for reducing the coarsening of negative active material, and carbon black was added in the amount of 0.2 parts by mass in relation to 100 parts by mass of the active material. The negative active material paste to which the organic compound and carbon black had been added was packed into an expanded-type current collector to fabricate a negative plate B.

Negative plate C:

An organic compound in which formaldehyde condensate of bisphenolA and aminobenzene sodium sulfonate salt (molecular weight: 17,000 to 20,000; sulfur content in the compound: 6 to 11 mass%) expressed in Chemical Formula 1 was used as the main component was selected as the organic compound for reducing the coarsening of negative active material, flake graphite (grain diameter: 180 μm) was used as the carbonaceous electrically conductive material, and the added amount thereof was 2 parts by mass in relation to 100 parts by mass of the active material. The negative active material paste to which the organic compound and carbon black had been added was packed into an expanded-type current collector to fabricate a negative plate C.

Next, the negative plates A, B, and C, positive plates, and two types of separators were used in combination, and a JIS B19 size lead-acid battery was assembled as an example. The battery were assembled by stacking positive plates and negative plates in alternating fashion via separators by configuring various plate packs so that the total surface area of the positive plates per unit of the plate pack volume was from 2.1 $cm^2/cm^3$ (three positive plates and three negative plates) to 6.2 $cm^2/cm^3$ (nine positive plates and nine negative plates), and the plate lugs of homopolar plates were welded together in a cast-on-strap (COS) scheme to fabricate plate packs. The plate pack volume of the lead-acid battery was 325 [$cm^3$]. In the present embodiment, positive plates and negative plates having the same size were used to configure a plate pack. Therefore, the plate pack volume can be calculated by multiplying the thickness dimension

(the dimension measured in the stacking direction of the plates) 2.9 [cm] of the plate pack in a state accommodated in a cell chamber by the surface area (mathematical product of the width (10.1 [cm]) and the height (11.1 [cm])) of one side of the portion that excludes the plate lug and plate foot portions of the negative collector.

Here, a separator P was a separator in which a polyethylene separator was used alone, and a separator Q was a separator having a structure in which a nonwoven fabric composed of glass fiber was disposed on the surface of a polyethylene separator facing the surface of a negative plate.

In the present example, a glass fiber nonwoven fabric was used as the nonwoven fabric constituting the separator Q, but it is also possible to use a nonwoven fabric composed of polyethylene, polypropylene, or another polyolefin material, or pulp or another material fiber in places of the glass fiber nonwoven fabric, and it is also possible to use a nonwoven fabric composed of a mixture of a plurality of these material fibers. A nonwoven fabric composed of a mixture of a plurality of fibers selected from the materials described above is preferably used as the nonwoven fabric used as a separator, and even more preferred is a nonwoven fabric composed of a mixture of these fibers into which silica has been made.

In the present example, the separator Q was formed by superimposing a nonwoven fabric composed of glass fiber on a polyethylene separator, but the separator Q may be solely composed of a nonwoven fabric made of glass fiber or the like. In other words, the separator Q may be configured so that the surface facing the negative plate is composed of a nonwoven fabric made of glass, polyolefin, pulp, or another material fiber.

Next, formation in the container was carried out. Diluted sulfuric acid having a specific gravity of 1.24 was injected into the container, and the battery was charged with an electrical amount that was 200% of theoretical capacity based on the amount of active material. The characteristics and quantity of the positive active material changes depending on the temperature at the time of formation, the electric current density, the specific gravity of the electrolyte, and the amount of lead sulfate included in the paste. The specific surface area of the positive active material is decreased when the formation temperature is increased, and the specific surface area of the positive active material can be increased when the specific gravity of the electrolyte is increased. In view of the above, the temperature during formation in the container and the specific gravity of the electrolyte are adjusted at the same time that the amount of active material is adjusted in terms of the amount of lead sulfate included in the paste; and various batteries were prepared with a differing total surface area of the positive active material per unit of the plate pack volume. In addition to selecting the formation conditions and the amount of lead sulfate included in the paste, it is also possible to adjust the total surface area of the positive active material per unit of the plate pack volume by suitably selecting, e.g., the lead powder starting material, the lead powder kneading conditions, the plate aging conditions, or the like. Even if means for adjusting the total surface area of the positive active material per unit of the plate pack volume differs, the result is that prescribed effects of the present invention can be obtained as long as the total surface area of the positive active material per unit of the plate pack volume is in the range of the present invention.

The total surface area of the positive active material per unit of the plate pack volume was measured using a method in which a battery for measuring the active material characteristics was fabricated, the battery was disassembled and the positive plates were removed, and the mathematical product of the active material weight and the measured value of the specific surface area measured by the above-described method was calculated, and the result was divided by the plate pack volume.

Nuclear magnetic resonance (NMR) spectroscopy was used to confirm the presence of the formaldehyde condensate of bisphenolA and aminobenzenesulfonic acid expressed in Chemical formula 1 in the negative active material. The following analysis was carried out using an NMR spectroscopy device (ECA-500FT-NMR) manufactured by JEOL Ltd.

First, the lead-acid batteries of the example 1 following formation were disassembled and the negative plates were removed. The removed negative plates were washed and the sulfuric acid content was washed away. The negative active material following formation is a spongy metallic lead. The negative plates were dried in nitrogen or another inert gas in order to prevent oxidation of the negative active material. The negative active material was removed from the dried negative plates and pulverized. The pulverized powder was added to a solution of 10% sodium hydroxide and the extract excluding the generated precipitate (lead hydroxide) was analyzed and measured using the device described above. The measurement conditions are listed in Table 1.

[Table 1]

| | |
|---|---|
| Measurement nuclide | $^1H$ |
| Magnetic field intensity | 11.747 T (500 MHz with $^1H$ nuclide |
| Observation range | -3 ppm to -15 ppm |
| Data points | 16,384 points |

(continued)

| | |
|---|---|
| Measurement mode | Non-decoupling |
| Pulse wait time | 7 sec. |
| Cumulative cycles | 128 cycles |
| Measurement solvent | Heavy water |
| Measurement temperature | Room temperature |

FIG. 2 shows a spectral diagram measured by NMR spectroscopy. The horizontal axis shows the chemical shift (ppm) and the vertical axis shows the peak intensity.
As shown by the double circles in FIG. 2, peaks originating from the p-aminobenzenesulfonic acid group in the formaldehyde condensate of bisphenol aminobenzenesulfonic acid expressed in Chemical formula 1 were observed at chemical shifts of 6.7 ppm and 7.5 ppm. As shown by the triangle in FIG. 2, a peak originating from the bisphenolA structure of the formaldehyde condensate of bisphenolA and aminobenzenesulfonic acid expressed in Chemical formula 1 were observed in the chemical shift range of 0.5 ppm to 2.5 ppm.

Based on the results noted above, the formaldehyde condensate of bisphenol A and aminobenzenesulfonic acid expressed in Chemical formula 1 was observed in the negative active material.

The charge acceptance and the cycle characteristics of the fabricated lead-acid battery were measured. First, the charge acceptance was measured in the following manner. A newly assembled lead-acid battery was placed in a thermostat at 25°C, the SOC (state of charge) was adjusted to 90% of a fully charged state, and the value of the charging current was measured at the fifth second (5th-second charging-current value) from the start of application of a charging voltage of 14 V (where the electric current prior to reaching 14 V was limited to 100 A). A high 5th-second charging current value means that charge acceptance is high. A newly assembled battery was placed in a thermostat at 40°C, a cycling test was repeated for 5000 cycles in which a single cycle was composed of a charging time of 10 minutes with a charging voltage of 14.8 V (where the electric current prior to reaching 14.8 V was limited to 25 A) and a discharging time of four minutes at a constant-current discharge of 25A, and charge acceptance was then measured using the same conditions as the initial conditions described above. In other words, a higher 5th-second charging-current value after 5000 cycles means that initial good charge acceptance was maintained thereafter.

The measurement of the cycling characteristics (service life test) was carried out in the following manner. The ambient temperature was adjusted so as to bring the battery temperature to 25°C, and a service life test was carried out by discharging at a constant current of 45 A for 59 seconds and 300 A for 1 second, and then charging at a constant current of 100 A and constant voltage of 14 V for 60 seconds, the above discharging and charging constituting a single cycle. This test is a cycling test for simulating the use of a lead-acid battery in an ISS vehicle. In this service life test, charging gradually becomes insufficient when full charging is not carried out, because the charging amount is low in relation to the discharging amount, and as a result, there is a gradual decline in the first-second voltage, which is one second of discharge carried out at a discharge current of 300 A. In other words, when the negative is polarized during constant current/constant voltage charging and a switch is prematurely made to constant voltage charging, the charging current weakens and charging becomes insufficient. In this service life test, the battery was judged to have reached the end of its service life when the first-second voltage at 300-A discharge dropped below 7.2 V.

The state of insufficient discharge continues and cycling characteristics are degraded when a high charge acceptance cannot be maintained during charging and discharging cycles. The level of charge acceptance during charging and discharging cycles are optimally evaluated by evaluating the cycling characteristics and changes in the 5th-second charging current value due to the charging and discharging cycles.

The charge acceptance during constant voltage charging and the durability under PSOC can be evaluated using the test described above.

Tables 2 and 3 show the measurement results of the cycling characteristics and the 5th-second charging current carried out for the various fabricated lead-acid batteries. The difference between Tables 2 and 3 is only the use of different separators. In Table 2, the conventional example is the case in which the negative plate A was used and the total surface area of the positive active material per unit of the plate pack volume was set to 3.0 $m^2/cm^3$; and the comparative example is the case in which the total surface area of the positive active material per unit of the plate pack volume was set to 16.0 $m^2/cm^3$. The reference example is the case in which the negative plate B or C was used and the total surface area of the positive active material per unit of the plate pack volume was set to 3.0 or 16.0 $m^2/cm^3$. The reference example is also the case in which the separator Q was used and the total surface area of the positive active material per unit of the plate pack volume was set to 3.0 or 16.0 $m^2/cm^3$. The 5th-second charging current and cycling characteristics shown in each table were evaluated with the conventional example (No. 1) of Table 2 set to 100 (with the default value of 5th-second charging current set to 100).

[Table 2]

| № | Total surface area of positive active material per unit of plate pack volume (m²/cm³) | Total surface area of positive plates per unit of plate pack volume (cm²/cm³) | Separator type | Negative plate type | 5th-second charging current At start | 5th-second charging current After 5000 cycles | Cycling characteristics | Remarks |
|---|---|---|---|---|---|---|---|---|
| 1 | 3. 0 | 4. 1 (6 positive plates, 6 negative plates) | P | A | 100 | 49 | 100 | Conventional example |
| 2 | 3. 5 | | | | 102 | 51 | 105 | Example |
| 3 | 6. 0 | | | | 104 | 51 | 108 | |
| 4 | 8. 0 | | | | 105 | 52 | 110 | |
| 5 | 10. 0 | | | | 106 | 52 | 108 | |
| 6 | 12. 5 | | | | 108 | 51 | 105 | |
| 7 | 15. 6 | | | | 109 | 51 | 100 | |
| 8 | 16. 0 | | | | 110 | 43 | 85 | Comparative example |
| 9 | 3. 0 | | | B | 140 | 100 | 260 | Reference example |
| 10 | 3. 5 | | | | 160 | 123 | 283 | Example |
| 11 | 6. 0 | | | | 177 | 135 | 290 | |
| 12 | 8. 0 | | | | 185 | 141 | 305 | |
| 13 | 10. 0 | | | | 196 | 137 | 296 | |
| 14 | 12. 5 | | | | 200 | 131 | 288 | |
| 15 | 15. 6 | | | | 203 | 124 | 275 | |
| 16 | 16. 0 | | | | 205 | 110 | 247 | Reference example |
| 17 | 3. 0 | | | C | 140 | 104 | 270 | Reference example |
| 18 | 3. 5 | | | | 161 | 130 | 295 | Example |
| 19 | 6. 0 | | | | 178 | 146 | 310 | |
| 20 | 8. 0 | | | | 185 | 155 | 335 | |
| 21 | 10. 0 | | | | 197 | 148 | 316 | |
| 22 | 12. 5 | | | | 201 | 138 | 303 | |
| 23 | 15. 6 | | | | 203 | 128 | 285 | |
| 24 | 16. 0 | | | | 205 | 114 | 252 | Reference example |

[Table 3]

| No. | Total surface area of positive active material per unit of plate pack volume ($m^2/cm^3$) | Total surface area of positive plates per unit of plate pack volume ($cm^2/cm^3$) | Separator type | Negative plate type | 5th-second charging current | | Cycling characteristics | Remarks |
|---|---|---|---|---|---|---|---|---|
| | | | | | At start | After 5000 cycles | | |
| 25 | 3.0 | 4.1 (6 positive plates, 6 negative plates) | Q | A | 95 | 59 | 130 | Reference example |
| 26 | 3.5 | | | | 97 | 61 | 135 | Example |
| 27 | 6.0 | | | | 99 | 61 | 138 | |
| 28 | 8.0 | | | | 100 | 62 | 140 | |
| 29 | 10.0 | | | | 101 | 62 | 138 | |
| 30 | 12.5 | | | | 104 | 61 | 135 | |
| 31 | 15.6 | | | | 105 | 61 | 130 | |
| 32 | 16.0 | | | | 106 | 53 | 115 | Reference example |
| 33 | 3.0 | | | B | 135 | 110 | 295 | Reference example |
| 34 | 3.5 | | | | 155 | 133 | 318 | Example |
| 35 | 6.0 | | | | 172 | 145 | 325 | |
| 36 | 8.0 | | | | 180 | 151 | 340 | |
| 37 | 10.0 | | | | 191 | 147 | 331 | |
| 38 | 12.5 | | | | 195 | 141 | 323 | |
| 39 | 15.6 | | | | 198 | 134 | 310 | |
| 40 | 16.0 | | | | 200 | 120 | 282 | Reference example |
| 41 | 3.0 | | | C | 135 | 116 | 305 | Reference example |
| 42 | 3.5 | | | | 156 | 142 | 330 | Example |
| 43 | 6.0 | | | | 173 | 158 | 345 | |
| 44 | 8.0 | | | | 180 | 167 | 370 | |
| 45 | 10.0 | | | | 192 | 160 | 351 | |
| 46 | 12.5 | | | | 196 | 150 | 338 | |
| 47 | 15.6 | | | | 198 | 140 | 320 | |
| 48 | 16.0 | | | | 200 | 126 | 287 | Reference example |

The results of Tables 2 and 3 shown above are the results of measuring the cycling characteristics and the 5th-second charging current when three types of negative plates A, B, C and two types of separators P, Q have been combined with eight types of positive plates in which the total surface area of the positive plates per unit of the plate pack volume was fixed at 4.1 $m^2/cm^3$ (6 positive plates and 6 negative plates), and the total surface area of the positive active material per unit of the plate pack volume has been varied from 3.0 to 16.0 $m^2/cm^3$. In these examples, the thickness of the separator, i.e., distance between mutually adjacent plates was set to a standard 0.8 mm. In the case that separator Q was used, the distance between plates is not necessarily increased by thickness of that glass mat that was also used. The increased thickness by the additional use of a glass mat is offset when the ribs formed in the separator deform or make other accommodation.

Based on Table 2 (Nos. 1 to 8), it is apparent that 5th-second charging current (charge acceptance) and cycling characteristics (service life performance under PSOC) can be considerably improved, albeit slightly, in comparison with the conventional example when the total surface area of the positive active material per unit of the plate pack volume is set in a range of 3.5 to 15.6 $m^2/cm^3$, even when sodium lignin sulfonate that is conventionally used as a main component is used as the organic compound shown in Chemical formula 2 for reducing the coarsening of negative active material.

Furthermore, based on Table 2 (Nos. 9 to 16), it is apparent that 5th-second charging current (charge acceptance) and cycling characteristics (service life performance under PSOC) can be considerably improved in comparison with the conventional example, when the condensate of Chemical formula 1 as a main component is used as the organic compound for reducing the coarsening of negative active material, even in the case that the total surface area of the positive active material per unit of the plate pack volume is 3.0 $m^2/cm^3$. The 5th-second charging current and cycling characteristics can be considerably improved by setting the total surface area of the positive active material per unit of the plate pack volume in a range of 3.5 to 15.6 $m^2/cm^3$ in comparison with the case in which the total surface area of the positive active material per unit of the plate pack volume is set to 3.0 $m^2/cm^3$. The 5th-second charging current continues to increase in accompaniment with the increase in total surface area of the positive active material per unit of the plate pack volume, but the cycling characteristics begin to decrease at an intermediate point in the vicinity of the peak. In the particular case that the total surface area of the positive active material per unit of the plate pack volume is 16.0 $m^2/cm^3$, the cycling characteristics tend to rapidly degrade in comparison with the case of 15.6 $m^2/cm^3$. This is due to the phenomenon referred to as sludge formation in which the structure of the active material decays due to repeated charging and discharging. For this reason, the total surface area of the positive active material per unit of the plate pack volume is set in a range of 3.5 to 15.6 $m^2/cm^3$.

The effect of the carbonaceous electrically conductive material added to the negative active material can be seen in a comparison of Nos. 9 to 16 and Nos. 17 to 24 of Table 2. In other words, in the condition in which an organic compound having the condensate of Chemical formula 1 as the main ingredient is used for reducing the coarsening of the negative active material, Nos. 9 to 16 show the result of adding 0.2 parts by mass of carbon black, and Nos. 17 to 24 show the result of adding 2 parts by mass of flake graphite.

The added amount of flake graphite can be readily increased because flake graphite has a characteristic in which the physical properties of the active material paste do not vary (does not harden) even when the added amount is increased. The present example shows the case in which 2 parts by mass of flake graphite have been added.

In the case that 2 parts by mass of flake graphite were added to 100 parts by mass of active material, there is little difference in the initial 5th-second charging current, but there was even greater improvement in the 5th-second charging current and the cycling characteristics after 5000 cycles in comparison with that case in which 0.2 parts by mass of carbon black was added to 100 parts by mass of the active material.
This difference is thought to be the result of facilitated charging because the flake graphite has a lower resistance value than carbon black as the carbonaceous electrically conductive material, and because the addition amount of flake graphite can be increased.

The effect of type of separator can be seen in a comparison of Tables 2 and 3. In other words, in each of the negative plates A, B, C, the effect of the type of separator was compared for the case in which the total surface area of the positive active material per unit of the plate pack volume was varied from 3.0 to 16.0 $m^2/cm^3$. A comparison of Nos. 1 to 8 and Nos. 25 to 32, Nos. 9 to 16 and Nos. 33 to 40, and Nos. 17 to 24 and Nos. 41 to 48 shows that although the initial 5th-second charging current decreased slightly by changing the separator P to separator Q, but the charging current after 5000 cycles and the cycling characteristics both tended to improve. This is due to the fact that the descent of sulfuric acid ions is suppressed and the occurrence of stratification can be prevented when a high-porosity separator composed of a nonwoven fabric is made to face the surface of the negative plate, as described above.

[Table 4]

| No. | Total surface area of positive active material per unit of plate pack volume ($m^2/cm^3$) | Total surface area of positive plates per unit of plate pack volume ($cm^2/cm^3$) | Separator type | Negative plate type | 5th-second charging current | | Cycling characteristics | Remarks |
|---|---|---|---|---|---|---|---|---|
| | | | | | At start | After 5000 cycles | | |
| 49 | 6. 0 | 2. 1 (3 positive plates, 3 negative plates) | Q | C | 1 3 4 | 1 1 6 | 378 | Example |
| 50 | | 2. 8 (4 positive plates, 4 negative plates) | | | 1 4 7 | 1 3 0 | 367 | |
| 51 | | 3. 4 (5 positive plates, 5 negative plates) | | | 1 6 0 | 1 4 4 | 356 | |
| 43 | | 4. 1 (6 positive plates, 6 negative plates) | | | 1 7 3 | 1 5 8 | 345 | |
| 52 | | 4. 8 (7 positive plates, 7 negative plates) | | | 1 8 6 | 1 7 2 | 334 | |
| 53 | | 5. 5 (8 positive plates, 8 negative plates) | | | 1 9 9 | 1 8 6 | 323 | |
| 54 | | 6. 2 (9 positive plates, 9 negative plates) | | | 2 1 2 | 2 0 0 | 312 | |
| 55 | 1 2. 5 | 2. 1 (3 positive plates, 3 negative plates) | | | 1 5 7 | 1 0 8 | 371 | |
| 56 | | 2. 8 (4 positive plates, 4 negative plates) | | | 1 7 0 | 1 2 2 | 360 | |
| 57 | | 3. 4 (5 positive plates, 5 negative plates) | | | 1 8 3 | 1 3 6 | 349 | |
| 46 | | 4. 1 (6 positive plates, 6 negative plates) | | | 1 9 6 | 1 5 0 | 338 | |
| 58 | | 4. 8 (7 positive plates, 7 negative plates) | | | 2 0 9 | 1 6 4 | 327 | |
| 59 | | 5. 5 (8 positive plates, 8 negative plates) | | | 2 2 2 | 1 7 8 | 316 | |
| 60 | | 6. 2 (9 positive plates, 9 negative plates) | | | 2 3 5 | 1 9 2 | 305 | |

The results of Table 4 above were obtained by measuring the 5th-second charging current and the cycling characteristics for the case in which the total surface area of the positive plates per unit of the plate pack volume was varied from 2.1 to 6.2 $m^2/cm^3$, in the case that the total surface area of the positive active material per unit of the plate pack volume was 6.0 and 12.5 $m^2/cm^3$. The type of separator was Q, and the type of negative plate was C.

It is apparent from the results of Table 4 that there is a reciprocity relationship between the 5th-second charging current and the cycling characteristics in that the 5th-second charging current increases when the total surface area of the positive plates per unit of the plate pack volume is increased, i.e., when the number of plates is increased, but the cycling characteristics are reduced. The plate pack is limited in that the space inside the container has a fixed volume, and there is also a limit from the aspect of plate strength were the number of plates accommodated in the fixed-volume container to be increased by making the plates thinner. Therefore, it is ordinarily difficult to set the total surface area of the positive plates per unit of the plate pack volume to be 6.2 $cm^2/cm^3$. Conversely, setting the total surface area of the positive plates per unit of the plate pack volume to be 2.1 $cm^2/cm^3$ would mean that the plates would be thicker and the number of plates would be reduced. In this case, there is a problem in that production is ordinarily difficult in terms of current collector manufacturing and machining, the packing characteristics of the active material paste, and other aspects of manufacturing. Therefore, the total surface area of the positive plates per unit of the plate pack volume is preferably set in a range of 2.8 to 5.5 $cm^2/cm^3$.

[Table 5]

| No. | Total surface area of positive active material per unit of plate pack volume ($m^2/cm^3$) | Total surface area of positive plates per unit of plate pack volume ($cm^2/cm^3$) | Separator type | Negative plate type | 5th-second charging current | | Cycling characteristics | Remarks |
|---|---|---|---|---|---|---|---|---|
| | | | | | At start | After 5000 cycles | | |
| 61 | 5. 5 | 3. 4 (5 positive plates, 6 negative plates) | Q | C | 1 6 0 | 1 4 5 | 3 3 5 | Example |
| 43 | 6. 0 | 4. 1 (6 positive plates, 6 negative plates) | | | 1 7 3 | 1 5 8 | 3 4 5 | |
| 62 | 6. 5 | 4. 1 (6 positive plates, 5 negative plates) | | | 1 8 5 | 1 6 9 | 3 5 5 | |

The results of Table 5 show the result of measuring the 5th-second charging current and measuring the cycling characteristics in the case of configurations in which one or the other of the positive plates and the negative plates are greater in number, with reference to Example No. 43 (Table 3) in which the number of positive- and negative plates was the same. In the present examples (Nos. 61, 62), the thickness obtained by reducing the total number of plates by one was redistributed evenly to the thickness of the positive- and negative plates. As a result, the total surface area of the positive active material per unit of the plate pack volume and the total surface area of the positive plates per unit of the plate pack volume varied in the manner shown in Table 5.

It is apparent from these results that the 5th-second charging current and cycling characteristics are improved when the number of positive plates is greater than the number of negative plates.

Next, the average primary grain diameter of the flake graphite was varied in the lead-acid batteries having the plate pack configuration of the type in No. 19 in Table 2 and No. 43 in Table 3, and the effect that the varied average primary grain diameter had on the battery characteristics was observed.

The average primary grain diameter of the flake graphite was varied at 80 μm, 100 μm, 120 μm, 140 μm, 180 μm, and 220 μm, but the plate pack configuration of the type in No. 19 in Table 2 and No. 43 in Table 3 was otherwise

the same. The results of evaluating the 5th-second charging current and the cycling characteristics are shown in Tables 6 and 7. The 5th-second charging current and cycling characteristics shown in each table were evaluated with the conventional example of Table 2 set to 100 (with the default value of 5th-second charging current set to 100).

[Table 6]

| No. | Total surface area of positive-pole active material per unit of pole-plate group volume ($m^2/cm^3$) | Total surface area of positive-pole plates per unit of pole-plate group volume ($cm^2/cm^3$) | Separator type | Negative-pole plate type | Average primary grain diameter of graphite (μm) | Fifth-second charging current | | Cycling characteristics | Remarks |
|---|---|---|---|---|---|---|---|---|---|
| | | | | | | At start | After 5000 cycles | | |
| 63 | 6. 0 | 4. 1 (6 positive-pole plates, 6 negative-pole plates) | P | C | 80 | 147 | 56 | 159 | Example |
| 64 | | | | | 100 | 158 | 80 | 199 | |
| 65 | | | | | 120 | 163 | 102 | 236 | |
| 66 | | | | | 140 | 168 | 124 | 273 | |
| 19 | | | | | 180 | 178 | 146 | 310 | |
| 67 | | | | | 220 | 178 | 146 | 310 | |

[Table 7]

| No. | Total surface area of positive active material per unit of plate pack volume ($m^2/cm^3$) | Total surface area of positive plates per unit of plate pack volume ($cm^2/cm^3$) | Separator type | Negative plate type | Average primary grain diameter of graphite (μm) | 5th-second charging current | | Cycling characteristics | Remarks |
|---|---|---|---|---|---|---|---|---|---|
| | | | | | | At start | After 5000 cycles | | |
| 68 | 6. 0 | 4. 1 (6 positive plates, 6 negative plates) | Q | C | 80 | 142 | 70 | 194 | Example |
| 69 | | | | | 100 | 153 | 94 | 234 | |
| 70 | | | | | 120 | 158 | 114 | 271 | |
| 71 | | | | | 140 | 163 | 136 | 308 | |
| 43 | | | | | 180 | 173 | 158 | 345 | |
| 72 | | | | | 220 | 173 | 158 | 345 | |

It is apparent from the results of Tables 6 and 7 that the initial 5th-second charging current is increases in accompaniment with an increase in the average primary grain diameter of flake graphite and that the cycling characteristics are also improved, regardless of the type of separator. This tendency is marked when the average primary grain diameter of the flake graphite is 100 μm or more. This is due to the fact that when the average primary grain diameter of the flake graphite is low, the electrical resistance of the contact points thereof is increased, the electrical resistance decreases as the average primary grain diameter increases, and the charging characteristics and cycle service life is improved. In this case as well, it is apparent that the cycling characteristics are improved in the same manner as the results described above when the separator Q, in which a nonwoven fabric is used in the portion facing the negative plate, is used as the separator (Table 7) in comparison with the case in which the polyethylene separator P is used (Table 6).

From these results, the average primary grain diameter of the flake graphite is preferably in a range of 100 μm

or more, and optimally 180 μm. When the average primary grain diameter exceeds the above range, manufacturing yield is poor and acquisition is difficult because such flake graphite is a natural substance.

In conventional lead-acid batteries, efforts have been made exclusively to improve the charge acceptance and service life performance of the negative plate in order to improve the charge acceptance of the lead-acid battery, and there has been no consideration given to improving the charge acceptance of a lead-acid battery by improving the performance of the positive plate. For this reason, the charge acceptance of the entire lead-acid battery has been conventionally determined by the charge acceptance of the negative plate, and there are limitations to improving the charge acceptance of a lead-acid battery. With the present invention, consideration is given to the performance of the positive active material in order to break through this limitation, and the charge acceptance of an entire battery can be further improved over a conventional lead-acid battery by improving the performance of the positive active material.

In prior art, improvement in charge acceptance was made exclusively by improvement in the characteristics of the negative plate, but in the present invention, the value of the total surface area of the positive active material per unit of the plate pack volume is increased to thereby improve the charge acceptance of the positive plate. This makes it possible to further improve charge acceptance of the entire battery in comparison with prior art and even higher efficiency discharge under PSOC is made possible.

In accordance with the present invention, the charge acceptance of the lead-acid battery can be improved, thereby making it possible to prevent repeated charging and discharging in a state of insufficient charge. Therefore, it is possible to prevent lead sulfate, which is a discharge product, from coarsening due to repeated charging and discharging in a state of insufficient charge, and the service life characteristics of the lead-acid battery under PSOC are improved. This is a considerable advancement for a lead-acid battery used under PSOC and greatly contributes to performance improvement in a lead-acid battery mounted in a micro-hybrid vehicle or the like.

Industrial Applicability

As described above, the present invention provides a flooded-type lead-acid battery in which the charge acceptance and the service life performance under PSOC is improved over a conventional lead-acid battery and contributes to the diffusion of ISS vehicles, power generation and control vehicles, and other micro-hybrid vehicles. Therefore, the present invention has considerable industrial applicability in that it contributes to lower $CO_2$ emissions by improving the fuel efficiency of automobiles, and is useful in solving the global issue of reducing global warming.

## Claims

**1.** A flooded-type lead-acid battery, comprising a container accommodating:

a plate pack being obtained by stacking a negative plate having a negative active material packed into a negative collector, a positive plate having a positive active material packed into a positive collector, and a separator being interposed therebetween; and
an electrolyte,

wherein charging is carried out intermittently and high-rate discharging to a load is carried out in a partial state of charge,
**characterized in that** at least a carbonaceous electrically conductive material and an organic compound capable of suppressing coarsening of the negative active material due to charging and discharging are added to the negative active material, and
the positive plates has a total surface area [$m^2$] of the positive active material per unit plate pack volume [$cm^3$] is in a range of 3.5 to 15.6 [$m^2/cm^3$], and
wherein the organic compound capable of suppressing coarsening of the negative active material due to charging and discharging is an organic compound having, as a main component, a formaldehyde condensate of bisphenolA and aminobenzenesulfonic acid represented by Chemical Formula 1 below.

[Chemical Formula 1]

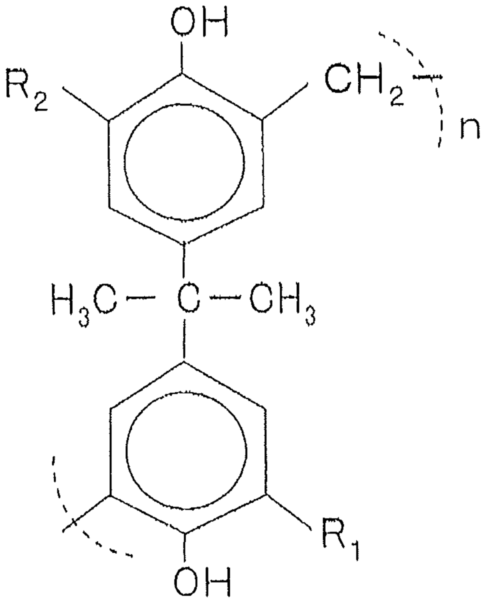

where $R_1$, $R_2$ are hydrogen or

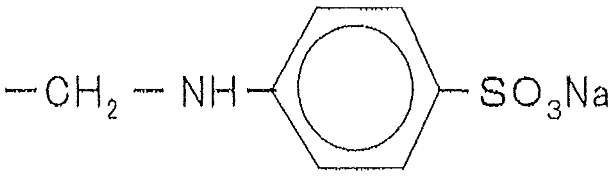

(excluding the case in which $R_1$, $R_2$ are both hydrogen)

2. The lead-acid battery of claim 1, wherein the positive plate has the total surface area [$cm^2$] of the positive plate per unit plate pack volume [$cm^3$] is in a range of 2.8 to 5.5 $cm^2/cm^3$.

3. The lead-acid battery of claim 1 or 2, wherein the carbonaceous electrically conductive material is flake graphite.

4. The lead-acid battery of claim 3, wherein the flake graphite has an average primary grain diameter of 100 $\mu$m or more.

5. The lead-acid battery of any one of the preceding claims, wherein the separator comprises a nonwoven fabric at a surface facing the negative plate, the nonwoven fabric made from a fiber of at least one material selected from the group consisting of glass, pulp, and polyolefins,

## Patentansprüche

1. Blei-Säure-Batterie vom gefluteten Typ umfassend einen Behälter, der Folgendes aufnimmt:

   einen Plattenblock, der erhalten wird durch Stapeln einer negativen Platte mit einem negativen aktiven Material, das in einen negativen Kollektor verpackt ist, einer positiven Platte mit einem positiven aktiven Material, das in einen positiven Kollektor verpackt ist, und einen dazwischen eingefügten Separator; und
   einen Elektrolyten,

   wobei ein Laden intermittierend durchgeführt wird und eine Entladung mit einer hohen Rate zu einer Last in einem partiellen Ladezustand durchgeführt wird,
   **dadurch gekennzeichnet, dass** mindestens ein kohlenstoffhaltiges elektrisch leitfähiges Material und eine organische Verbindung, die in der Lage ist, eine Vergröberung des negativen aktiven Materials durch das Laden und Entladen zu unterdrücken, dem negativen aktiven Material hinzugefügt wird, und
   die positiven Platten einen Gesamtflächenbereich [$m^2$] des positiven aktiven Materials pro Einheit Plattenblockvolumen [$cm^3$] im Bereich von 3,5 bis 15,6 [$m^2/cm^3$] aufweisen, und
   wobei die organische Verbindung, die in der Lage ist, eine Vergröberung des negativen aktiven Materials durch Laden und Entladen zu unterdrücken, eine organische Verbindung ist, die als Hauptkomponente ein Formaldehyd-Kondensat aus Bisphenol A und Aminobenzolsulfonsäure enthält, das durch die nachstehende chemische Formel 1 dargestellt wird.

[Chemische Formel 1]

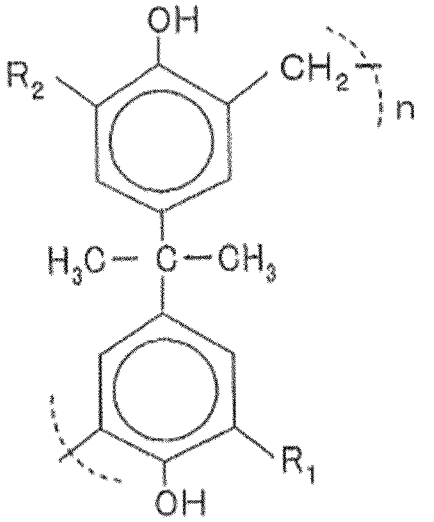

wobei $R_1$, $R_2$ Wasserstoff oder

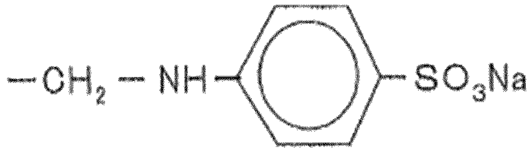

(ausgenommen in dem Fall, dass sowohl $R_1$ als auch $R_2$ Wasserstoff ist)

2. Blei-Säure-Batterie nach Anspruch 1, wobei die positive Platte den Gesamtoberflächenbereich [$cm^2$] der positiven Platte pro Einheit Plattenblockvolumen [$cm^3$] im Bereich von 2,8 bis 5,5 $cm^2/cm^3$ aufweist.

3. Blei-Säure-Batterie nach Anspruch 1 oder 2, wobei das kohlenstoffhaltige elektrisch leitfähige Material Flockengraphit ist.

4. Blei-Säure-Batterie nach Anspruch 3, wobei der Flockengraphit einen durchschnittlichen primären Korndurchmesser von 100 $\mu$m oder mehr aufweist.

5. Blei-Säure-Batterie nach einem der vorhergehenden Ansprüche, wobei der Separator einen Vliesstoff an einer der negativen Platte zugewandten Oberfläche umfasst, wobei der Vliesstoff aus einer Faser aus mindestens einem Material besteht, das aus der Gruppe bestehend aus Glas, Zellstoff und Polyolefinen ausgewählt ist.

**Revendications**

1. Batterie au plomb du type noyée comprenant un récipient contenant :

   un ensemble de plaques obtenu en empilant une plaque négative ayant une matière active négative empilée en un collecteur négatif, une plaque positive ayant une matière active positive empilée eu un collecteur positif ; et un séparateur interposé entre elles et
   un électrolyte,
   dans laquelle la charge est réalisée de façon intermittente et la décharge à taux élevé est réalisée dans un état de charge partielle,
   **caractérisée en ce que** au moins un matériau carboné électriquement conducteur et un composé organique susceptible de supprimer l'épaississement de l'électrode négative du fait des charges et décharges sont ajoutés à la matière active négative et
   les plaques positives ont une surface totale ($m^2$) de matière active positive par unité de volume de plaque ($cm^3$) qui est dans un rapport de 3,5 à 15,6 ($m^2/cm^3$) et
   dans laquelle le composé organique susceptible de supprimer l'épaississement de la matière active négative de fait des charges et décharges est un composé organique ayant comme composant principal un condensat formaldehyde de bisphénolA et un acide aminobenzènesulfonique représenté par la formule chimique ci-dessous

[Formule Chimique 1]

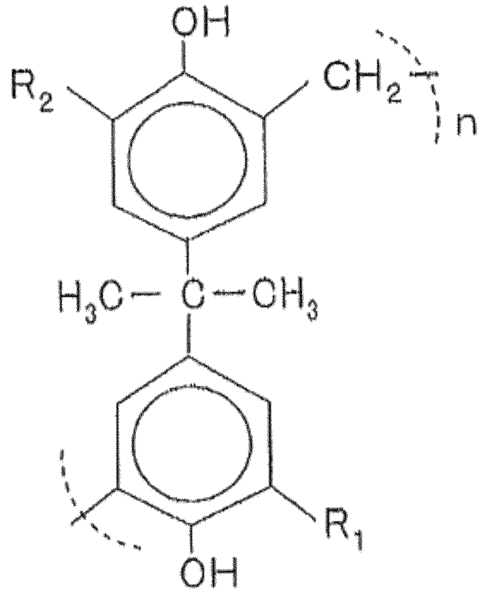

dans laquelle R1 et R2 sont de l'hydrogène ou

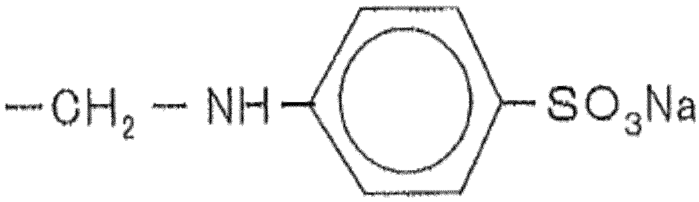

(en excluant le cas où R1 et R2 sont tous les deux de l'hydrogène)

2. Batterie au plomb selon la revendication 1, dans laquelle la plaque positive a la surface totale [$cm^2$] de la plaque positive par unité de volume de plaque ($cm^3$) qui est dans un rapport de 2,8 à 5,5 $cm^2/cm^3$.

3. Batterie au plomb selon la revendication 1 ou 2, dans laquelle la matière carbonée conductrice électriquement est du flocon de graphite.

4. Batterie au plomb selon la revendication 3, dans laquelle les flocons de graphite ont un diamètre moyen de grain primaire de 100 $\mu$m ou plus.

5. Batterie au plomb selon l'une quelconque des revendications précédentes, dans laquelle le séparateur comporte un tissu non tissé à une surface faisant face à la plaque négative, le tissu non tissé étant fait à partir de fibre de au moins un matériau sélectionné dans un groupe constitué de verre, pulpe et polyoléfines.

FIG. 1

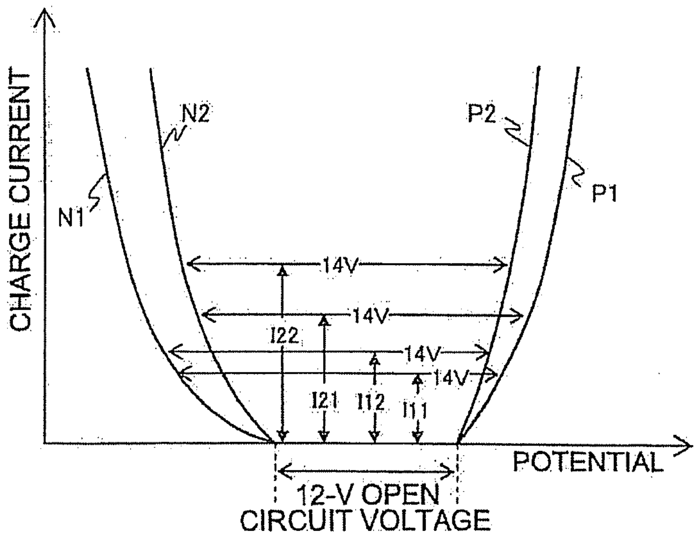
CHARGE CURRENT
N2
P2
N1
P1
14V
14V
14V
14V
I22
I21
I12
I11
POTENTIAL
12-V OPEN
CIRCUIT VOLTAGE

FIG. 2

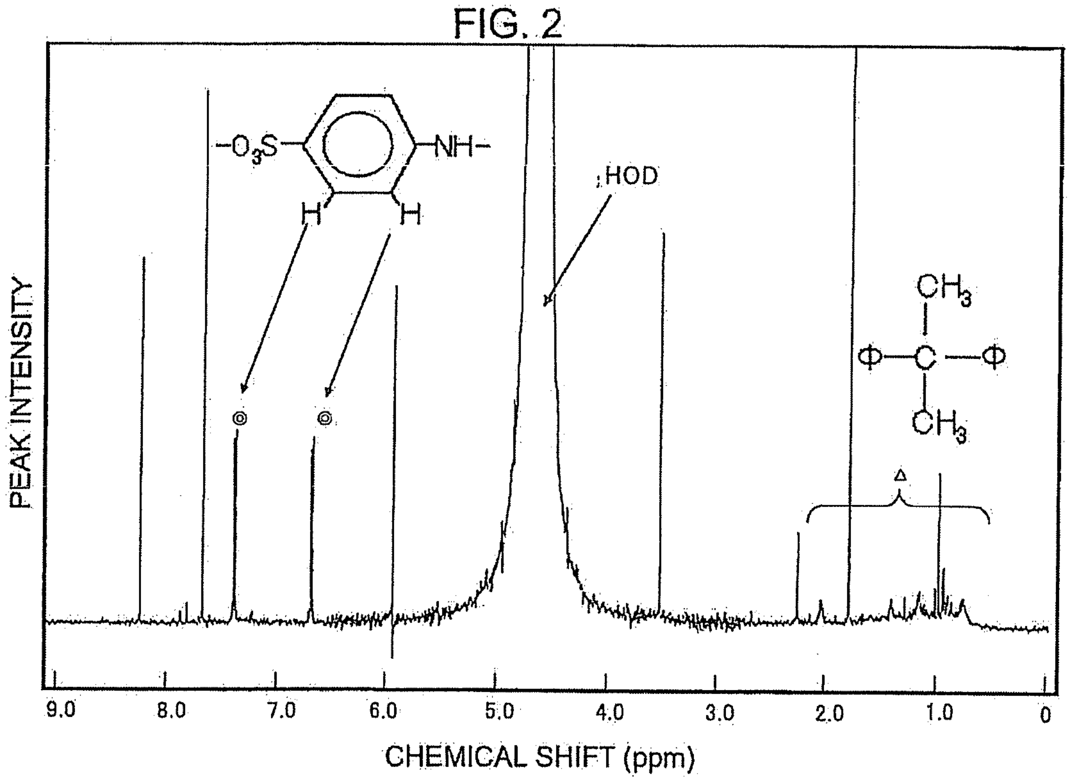
PEAK INTENSITY
HOD
9.0
8.0
7.0
6.0
5.0
4.0
3.0
2.0
1.0
0
CHEMICAL SHIFT (ppm)

FIG. 3

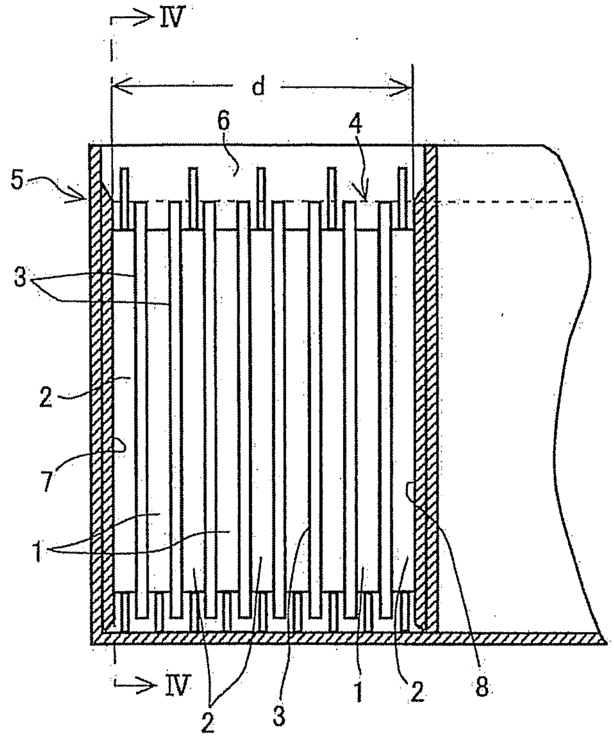


FIG. 4

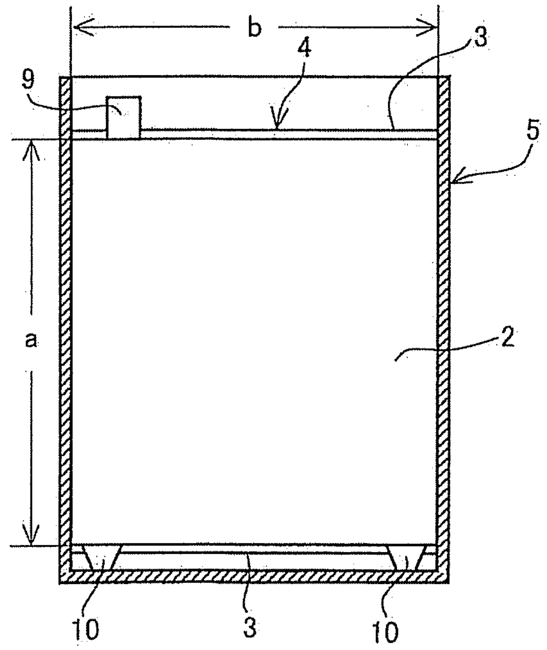

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003036882 A
- JP 7201331 A
- JP 11250913 A
- JP 2006196191 A
- US 20070172727 A1
- JP 2003051306 A
- JP 10040907 A
- JP 2002260714 A